# EUROPEAN PATENT SPECIFICATION

(11) **EP 4 639 804 B1**
(45) Date of publication and mention of the grant of the patent: **28.10.2026**
(21) Application number: 23904914.1
(22) Date of filing: 06.12.2023
(51) Int. Cl.: H04L 9/08, H04L 9/06, H04L 9/12, H04B 10/70

(54) **QUANTUM DATA COMMUNICATION NETWORKS, HUBS AND CLIENT DEVICES**
QUANTENDATENKOMMUNIKATIONSNETZE, HUBS UND CLIENT-VORRICHTUNGEN
RÉSEAUX DE COMMUNICATION DE DONNÉES QUANTIQUES, HUBS ET DISPOSITIFS CLIENTS

(30) Priority: 21.12.2022 US 202263476600 P
(43) Date of publication of application: 29.10.2025
(73) Proprietor: Photonic Inc., Coquitlam BC V3K 6T1 (CA)
(72) Inventor: MEYER-SCOTT, Evan, Coquitlam, British Columbia V3K 6T1 (CA); SIMMONS, Stephanie, Coquitlam, British Columbia V3K 6T1 (CA)
(74) Representative: Isarpatent
(86) International application number: PCT/CA2023/051615
(87) International publication number: WO 2024/130382

(56) References cited:
- US-A1- 2022 269 974
- LEVONIAN DAVID: "A Quantum Network Node Based on the Silicon-Vacancy Defect in Diamond", 1 April 2021 (2021-04-01), XP093188274, Retrieved from the Internet <URL:https://dash.harvard.edu/handle/1/37368264>
- LEVONIAN DAVID: "A Quantum Network Node Based on the Silicon-Vacancy Defect in Diamond", DOCTORAL DISSERTATION, HARVARD UNIVERSITY, 1 April 2021 (2021-04-01), XP093188274
- ROBERTS GEORGE LLOYD: "A multi-protocol quantum key distribution transmitter", DOCTORAL DISSERTATION, UNIVERSITY OF CAMBRIDGE, ENGINEERING, 1 July 2018 (2018-07-01), XP093188278, DOI: 10.17863/CAM.38039

## Description

### Field

This invention relates to data communication networks and, in particular, to optical data communication networks that facilitate quantum encryption and/or transmitting of quantum information.

### Background

Quantum communication takes advantage of the laws of quantum physics to transport information between users. Quantum communication channels derive inherent security from the no-cloning theorem, which states that is impossible to measure or copy an unknown state of a quantum particle without noticeably changing the state of the particle. As such, quantum communication channels enable secure transmission and exchange of quantum information between endpoints.

The wide range of applications of quantum communication includes quantum key distribution (QKD). In QKD, a quantum communication channel is used to exchange secret information - such as cryptographic keys, which can then be used to encrypt messages that are being communicated over insecure communication channels.

Given the advantages of quantum communication there is a desire for quantum communication networks which would facilitate quantum communications between multiple parties. However, many protocols that have been developed for quantum communication allow only two parties to communicate securely at any time. Attempts to extend such protocols to a quantum network comprising multiple users has usually proven to be insecure, to introduce losses, and/or to be impracticably complex.

Further prior art is: LEVONIAN DAVID: "A Quantum Network Node Based on the Silicon-Vacancy Defect in Diamond", DOCTORAL DISSERTATION, HARVARD UNIVERSITY, 1 April 2021 (2021-04-01), XP093188274, Retrieved from the Internet: URL:https:// dash.harvard.edu/handle/1/37368264

There is a desire for quantum communication networks which can connect multiple parties and can allow any of the parties to communicate simultaneously and securely with any other party of the network.

### Summary

The invention is defined by the claims appended hereto. This disclosure has a number of aspects. These include, without limitation:
- networks for communicating among client devices using encoded photon states;
- hubs for facilitating communications between client devices;
- methods for communication of information among devices;
- client devices operative to encode information in photon states;
- methods, apparatus and systems for remote sensing;
- methods and apparatus for quantum key distribution;
- methods for managing quantum systems of a hub.

One aspect of the disclosure provides a method for communicating data between first and second client devices. The method comprises: operating the first client device to emit a plurality of first photon states that each encode a corresponding first information element into a first optical path connected to a hub and operating the second client device to emit a plurality of second photon states that each encode a corresponding second information element into a second optical path connected to the hub; configuring the hub to attempt to load each of the plurality of first photon states into the quantum state of a corresponding one of a first plurality of quantum systems of the hub and configuring the hub to attempt to load each of the plurality of second photon states into the quantum state of a corresponding one of a plurality of second quantum systems of the hub; determining whether or not each of the attempts to load one of the photon states succeeded; performing a parity measurement between the quantum state of one of the quantum systems into which one of the first photon states was successfully loaded and the quantum state of one of the quantum systems into which one of the second photon states was successfully loaded; and communicating information indicating which ones of the first and second photon states were successfully loaded to the first and second client devices and communicating results of the parity measurement to at least one of the first and second client devices.

In some embodiments performing the parity measurement comprises consuming quantum entanglement of a first entangled pair of quantum systems of the hub.

In some embodiments performing the parity measurement comprises directly or indirectly performing a first Bell state measurement (BSM) between the one of the quantum systems into which one of the first photon states was successfully loaded and a first quantum system of the first entangled pair of quantum systems of the hub and performing a second BSM between the one of the quantum systems into which one of the second photon states was successfully loaded and a second quantum system of the first entangled pair of quantum systems of the hub.

In some embodiments configuring the hub to attempt to load each of the plurality of first photon states comprises configuring the first optical path to provide an optical connection between the first client device and first input of a Bell state analyzer (BSA) of the hub and optically connecting the corresponding one of the first plurality of quantum systems to a second input of the BSA.

In some embodiments the plurality of first photon states comprises a first time series of photon states and the hub is configured to control one or more optical switches to provide a sequence of optical configurations, each of the optical configurations corresponding in time to one of the first photon states and providing connectivity of a BSA to the first optical path and the corresponding one of the first plurality of optical systems.

In some embodiments each of the first photon states corresponds to one of the second photon states wherein each of the parity measurements is made between the quantum state of one of the first quantum systems into which one of the first photon states was successfully loaded and the quantum state of one of the second quantum systems into which the corresponding one of the second photon states was successfully loaded.

In some embodiments performing the parity measurement between the quantum state of one of the quantum systems into which one of the first photon states was successfully loaded and the quantum state of one of the quantum systems into which one of the second photon states was successfully loaded is repeated for each of plural distinct pairs, each of the plural distinct pairs comprising one of the quantum systems into which one of the first photon states was successfully loaded and one of the quantum systems into which one of the second photon states was successfully loaded.

In some embodiments the method further comprises, for each of the distinct pairs, either:
at the first client device, adjusting a value of the first information element corresponding to the one of the first photon states based on the result of the parity measurement; or
at the second client device, adjusting a value of the second information element corresponding to the one of the second photon states based on the result of the parity measurement.

In some embodiments the method further comprises, either at the first client device, adjusting a value of the first information element corresponding to the one of the first photon states based on the result of the parity measurement or at the second client device, adjusting a value of the second information element corresponding to the one of the second photon states based on the result of the parity measurement.

In some embodiments the method comprises: at the first client device, assembling a first copy of a raw encryption key; and at the second client device, assembling a second copy of the raw encryption key identical to the first copy of the raw encryption key. Each of the first and second copies of the raw encryption key comprises a sequence of values. Each of the values in the first copy of the raw encryption key is based on an original or adjusted value of one of the first information elements and each of the values on the second copy of the raw encryption key is based on an original or adjusted value of one of the second information elements.

In some embodiments communicating the results of the parity measurements is performed by way of a classical communication channel.

In some embodiments the method further comprises, at the hub, emitting first pulses of light into a communication channel extending to the first client device, wherein the first photon states are photon states obtained by modulating the first pulses of light at the first client device.

In some embodiments modulating the first pulses of light comprises attenuating the first pulses of light to a single photon level and amplitude modulating a plurality of time-bin qubit states by setting amplitudes for two time bins according to the corresponding first information elements.

In some embodiments the method comprises adjusting a wavelength of each of the pulses to match a wavelength of photon states emitted by the corresponding one of the first quantum systems of the hub.

In some embodiments the first and second photon states have infrared wavelengths.

In some embodiments the hub and the first and second client devices each comprises a clock and the method comprises synchronizing the clock of each of the first and second client devices with respect to the clock of the hub to within about 10 ps or about 100 ps or about 1000 ps.

In some embodiments configuring the hub to attempt to load each of the plurality of first photon states into the quantum state of a corresponding one of a first plurality of quantum systems of the hub comprises setting an optical switching network of the hub to direct the first photon states to a first input of a Bell State Analyzer (BSA) and to direct photon states originating from the corresponding one of a first plurality of quantum systems of the hub to a second input of the BSA.

In some embodiments the first plurality of quantum systems comprises electron spins of T centres in silicon and the method comprises swapping loaded photon states from the electron spins into quantum states of nuclear spins of the T centres.

In some embodiments performing a parity measurement between the quantum state of one of the quantum systems into which one of the first photon states was successfully loaded and the quantum state of one of the quantum systems into which one of the second photon states was successfully loaded comprises:
performing a Bell State Measurement (BSM) between the one of the quantum systems into which one of the first photon states was successfully loaded and a first quantum system of a pair of entangled quantum systems; and
performing a Bell State Measurement (BSM) between the one of the quantum systems into which one of the second photon states was successfully loaded and a second quantum system of the pair of entangled quantum systems.

In some embodiments the method comprises creating the entanglement of the pair of entangled quantum systems after the one of the first photon states was successfully loaded and the one of the second photon states was successfully loaded.

In some embodiments the method comprises cooling the quantum systems of the hub to cryogenic temperatures and operating the client devices at ambient temperature (e.g. room temperature).

Another aspect of the disclosure provides apparatus for facilitating data communication between a plurality of client devices. The apparatus comprises a hub comprising: at least one optical port, a plurality of Bell state analyzers (BSAs), a plurality of first quantum systems and a plurality of second quantum systems optically interconnected by an optical switching network, the optical switching network controlled by a controller. Each of the first and second quantum systems is operable to store a qubit state. The controller is configured to configure the optical switching network to:
receive from the first client device a plurality of first photon states that each encode a corresponding first information element at the at least one optical port and attempt to load each of the plurality of first photon states into the quantum state of a corresponding one of the plurality of first quantum systems of the hub; and
receive from the second client device a plurality of second photon states that each encode a corresponding second information element at the at least one optical port and attempt to load each of the plurality of second photon states into the quantum state of a corresponding one of the plurality of second quantum systems of the hub.
The controller is further configured to: determine whether or not each of the attempts to load one of the photon states succeeded; perform a parity measurement between the quantum state of one of the quantum systems into which one of the first photon states was successfully loaded and the quantum state of one of the quantum systems into which one of the second photon states was successfully loaded; and, communicate information indicating which ones of the first and second photon states were successfully loaded to the first and second client devices and communicate results of the parity measurement to at least one of the first and second client devices.

In some embodiments the controller is configured to create entangled pairs of quantum systems of the hub and performing the parity measurement comprises consuming quantum entanglement of a first pair of the entangled pairs of quantum systems of the hub.

In some embodiments the controller is configured to coordinate performing the parity measurement by directly or indirectly performing a first Bell state measurement (BSM) between the one of the quantum systems into which one of the first photon states was successfully loaded and a first quantum system of the first pair of entangled quantum systems of the hub and directly or indirectly performing a second BSM between the one of the quantum systems into which one of the second photon states was successfully loaded and a second quantum system of the first entangled pair of quantum systems of the hub.

In some embodiments the controller is configured to create the entanglement of the first pair of entangled quantum systems after at least one of: the one of the first photon states and the one of the second photon states was successfully loaded.

In some embodiments the controller is configured to create the entanglement of the first pair of entangled quantum systems after both of: the one of the first photon states and the one of the second photon states was successfully loaded.

In some embodiments each of the first photon states corresponds to one of the second photon states wherein each of the parity measurements is made between the quantum state of one of the first quantum systems into which one of the first photon states was successfully loaded and the quantum state of one of the second quantum systems into which the corresponding one of the second photon states was successfully loaded.

In some embodiments the controller is configured to repeat performing the parity measurement between the quantum state of one of the quantum systems into which one of the first photon states was successfully loaded and the quantum state of one of the quantum systems into which one of the second photon states was successfully loaded for each of plural distinct pairs, each of the plural distinct pairs comprising one of the quantum systems into which one of the first photon states was successfully loaded and one of the quantum systems into which one of the second photon states was successfully loaded.

In some embodiments the apparatus comprises the first client device wherein, the first client device includes a controller configured to, for each of the distinct pairs, selectively adjust a value of the first information element corresponding to the one of the first photon states based on the result of the parity measurement received from the hub.

In some embodiments the apparatus comprises the second client device, the first client device is configured to assemble a first copy of a raw encryption key, and the second client device is configured to assemble a second copy of the raw encryption key identical to the first copy of the raw encryption key. Each of the first and second copies of the raw encryption key comprises a sequence of values. Each of the values in the first copy of the raw encryption key is based on an original or adjusted value of one of the first information elements and each of the values of the second copy of the raw encryption key is based on an original or adjusted value of one of the second information elements.

In some embodiments the hub comprises a light source operable to emit first pulses of light into a communication channel extending to the first client device, wherein the first photon states are photon states obtained by modulating the first pulses of light at the first client device.

In some embodiments the apparatus comprises a wavelength modulator operable to adjust a wavelength of each of the pulses to match a wavelength of photon states emitted by the corresponding one of the first quantum systems of the hub.

In some embodiments the hub and the first and second client devices each comprises a clock and the controller of the hub is configured to coordinate synchronizing the clock of each of the first and second client devices with respect to the clock of the hub to within about 10 ps or about 100 ps or about 1000 ps.

In some embodiments performing a parity measurement between the quantum state of one of the quantum systems into which one of the first photon states was successfully loaded and the quantum state of one of the quantum systems into which one of the second photon states was successfully loaded comprises: performing a Bell State Measurement (BSM) between the one of the quantum systems into which one of the first photon states was successfully loaded and a first quantum system of a pair of entangled quantum systems; and performing a Bell State Measurement (BSM) between the one of the quantum systems into which one of the second photon states was successfully loaded and a second quantum system of the pair of entangled quantum systems.

In some embodiments configuring the optical switching network to attempt to load each of the plurality of first photon states into the quantum state of a corresponding one of the first plurality of quantum systems of the hub comprises setting the optical switching network of the hub to direct the first photon states to a first input of one of the BSAs and to direct photon states originating from the corresponding one of the first plurality of quantum systems of the hub to a second input of the one of the BSAs.

In some embodiments configuring the optical switching network to attempt to load each of the plurality of first photon states into the quantum state of a corresponding one of the first plurality of quantum systems of the hub comprises setting the optical switching network of the hub to direct the first photon states to a first input of a first BSA of the BSAs and to direct photon states originating from a first additional quantum system associated with the corresponding one of the first plurality of quantum systems of the hub to a second input of the first BSA; and configuring the optical switching network to attempt to load each of the plurality of second photon states into the quantum state of a corresponding one of the second plurality of quantum systems of the hub comprises setting the optical switching network of the hub to direct the second photon states to a first input of a second BSA of the BSAs and to direct photon states originating from a second additional quantum system associated with the corresponding one of the first plurality of quantum systems of the hub to a second input of the second BSA.

In some embodiments the controller is configured to swap the quantum state of the first additional quantum system to the corresponding one of the first quantum systems of the hub after a successful Bell State Measurement by the first BSA; and swap the quantum state of the second additional quantum system to the corresponding one of the second quantum systems of the hub after a successful Bell State Measurement by the second BSA.

In some embodiments the controller is configured to entangle the first and second additional quantum systems after the quantum states of the first and second additional quantum systems have been swapped to the corresponding ones of the first and second quantum systems of the hub

In some embodiments the controller is configured to perform the parity measurement by performing a first Bell State Measurement between the first additional quantum system and the corresponding one of the first quantum systems and performing a second Bell State Measurement between the second additional quantum system and the corresponding one of the second quantum systems.

In some embodiments performing the first BSM comprises applying a series of quantum gates between the first additional quantum system and the corresponding one of the first quantum system and performing the second BSM comprises applying a series of quantum gates between the second additional quantum system and the corresponding ones of the second quantum systems.

In some embodiments each of the first and second additional quantum systems comprise a spin of a T centre.

In some embodiments each of the first and second additional quantum systems comprises an electron spin.

In some embodiments the first additional quantum system and the corresponding one of the first quantum systems are respectively provided by an electron spin and a nuclear spin of a first T centre and the second additional quantum system and the corresponding one of the second quantum systems are respectively provided by an electron spin and a nuclear spin of a second T centre.

In some embodiments each quantum system of the first and second pluralities of quantum systems comprises a spin associated with a T centre.

In some embodiments each quantum system of the first and second pluralities of quantum systems comprises an electron spin.

In some embodiments each quantum system of the first and second pluralities of quantum systems comprises a nuclear spin.

In some embodiments the plurality of first photon states comprises a first time series of photon states and the controller is configured to control one or more optical switches of the optical switching network to provide a sequence of optical configurations, each of the optical configurations synchronized to coincide with arrival of one of the first photon states and providing connectivity of first and second inputs of a BSA to the first client device and the corresponding one of the first plurality of quantum systems respectively.

In some embodiments the controller is configured to: maintain a pool of entangled pairs of the quantum systems of the hub that are entangled; and make the parity measurement using one or more of the entangled pairs of the quantum systems of the pool.

In some embodiments communicating the results of the parity measurements is performed by way of a classical communication channel.

In some embodiments the first and second photon states have infrared wavelengths.

In some embodiments the controller is configured to configure the optical switching network to provide: an optical connection between a first BSA of the plurality of BSAs and a first additional quantum system that is coupled to a first quantum system of the first pair of entangled quantum systems; and an optical connection between the second BSA of the plurality of BSAs and a second additional quantum system that is electromagnetically coupled to a second quantum system of the first pair of entangled quantum systems.

Another aspect of the disclosure provides a system for communicating data among a plurality of client devices. The system comprises a hub comprising at least one optical port, a plurality of Bell state analyzers (BSAs) each operable to perform Bell State Measurements (BSMs) and a plurality of quantum systems optically interconnected by an optical switching network. The optical switching network is controlled by a controller. Each of the quantum systems operative to store a qubit state. The controller is configured to, in response to a request to establish communication between a first one of the client devices and a second one of the client devices, configure the optical switching network to provide optical connections between: an optical communication channel providing optical communication with the first client device and a first BSA of the hub; and the first BSA and a first quantum system of the quantum systems; and provide optical connections between: an optical communication channel providing optical communication with the second client device and a second BSA of the hub; and the second BSA and a second quantum system of the quantum systems. The controller is further configured to control the hub to receive from the first and second client devices respective first and second photon states that respectively encode first and second information elements; and, perform first and second BSMs using the first and second BSAs to load the first and second photon states into the first quantum system and the second quantum system respectively; perform a parity measurement on the loaded first and second photon states; and, communicate a result of the parity measurement to at least one of the first and second client devices.

In some embodiments the controller is configured to, before performing the parity measurement: cause the loaded first photon state to be swapped from the first quantum system to a first additional quantum system of the quantum systems; and cause the loaded second photon state to be swapped from the second quantum system to a second additional quantum system of the quantum systems.

In some embodiments the controller is configured to entangle the first and second quantum systems after swapping the loaded first and second photon states to the additional first and second quantum systems; and performing the parity measurement comprises consuming the entanglement of the first and second quantum systems.

In some embodiments the first quantum system and additional first quantum system are coupled and the second quantum system and additional second quantum system are coupled; and performing the parity measurement comprises: performing a Bell State Measurement (BSM) between the first quantum system and the additional first quantum system by applying a series of quantum gates between the first quantum system and the additional first quantum system; and performing a BSM between the second quantum system and the additional second quantum system by applying a series of quantum gates between the second quantum system and the additional second quantum system.

In some embodiments the coupling between the first quantum system and the additional first quantum system and the coupling between the second quantum system and the additional second quantum system is an electromagnetic coupling, wherein electromagnetic coupling includes: hyperfine coupling and spin-orbit coupling.

In some embodiments the controller is configured to set the optical switching network to: optically couple one of the BSAs between the first quantum system and the additional first quantum system; and optically couple another one of the BSAs between the second quantum system and the additional second quantum system. In some such embodiments performing the parity measurement comprises: performing a BSM between the first quantum system and the additional first quantum system; and performing a BSM between the second quantum system and the additional second quantum system.

In some embodiments: the first quantum system and the first additional quantum system are each provided by a corresponding spin of a first colour centre or luminescent centre; and the second quantum system and the second additional quantum system are each provided by a corresponding spin of a second colour centre or luminescent centre.

In some embodiments the first and second colour centre or luminescent centre each comprise a T centre.

In some embodiments the first quantum system and the second quantum system each comprise an electron spin.

In some embodiments the additional first quantum system and the additional second quantum system each comprise a nuclear spin.

In some embodiments the controller is configured to create entangled pairs of the quantum systems of the hub; and performing the parity measurement comprises consuming entanglement of one or more of the entangled pairs of the quantum systems of the hub.

In some embodiments the controller is configured to, in response to detecting a failure of the first BSM, iteratively repeat receiving a first photon state from the first client device and performing the first BSM until the first BSM succeeds; and, in response to detecting a failure of the second BSM, iteratively repeat receiving a second photon state from the second client device and performing the second BSM until the second BSM succeeds.

In some embodiments the controller is configured to switch to using a different one of the quantum systems as the first quantum system or the second quantum system after each of the iterations.

In some embodiments the controller is configured to communicate to the first and second client devices information that directly or indirectly identifies the iterations for which at least one of the first and second BSMs failed.

In some embodiments the client devices and the hub each include a clock and the controller of the hub is configured to execute a routine for synchronizing clocks of the client devices with the clock of the hub.

In some embodiments the controller of the hub is configured to control wavelengths of optical transitions of the respective ones of the plurality of quantum systems of the hub into which the first and second information is loaded to respectively match wavelengths of the first and second photon states received from the first and second client devices.

In some embodiments the wavelengths of the first and second photon states are different from one another.

In some embodiments the first and second client devices are respectively operative to emit a sequence of the first photon states and a sequence of the second photon states and the controller is configured to: attempt to load sequential ones of the sequence of first photon states and sequential ones of the sequence of second photon states into different ones of the quantum systems of the hub; match each of the quantum systems into which one of the sequence of first photon states has been successfully loaded with one of the quantum systems into which one of the sequence of second photon states has been successfully loaded; and perform parity measurements on each of the matched sets of quantum systems.

In some embodiments the controller is configured to maintain a pool of entangled pairs of the quantum systems wherein quantum states of each of the entangled pairs are entangled; and allocate from the pool, one or more entangled pairs to be consumed for performing the parity measurement.

In some embodiments the controller is configured to allocate the one or more entangled pairs to be consumed for performing the parity measurement after the first and second photon states have been successfully loaded into the first and second quantum systems respectively.

In some embodiments the hub comprises a laser light source and the controller is configured to control the laser light source to deliver optical pulses to the first client device for modulating at the first client device to yield the first photon states.

Another aspect of the disclosure provides a client device for a quantum communication network. The client device comprises: a client device controller; an optical attenuator operable to attenuate a pulse of light to a single photon level; a plurality of light modulators arranged to modulate photons of light attenuated by the optical attenuator to yield photon states; and an optical output port connected to receive the photon states and connectible to deliver the photon states into an optical communication channel. The client device controller is configured to control the plurality of light modulators according to the value of an information element such that the photon states encode the value of the information element.

In some embodiments the information element is a single bit value.

In some embodiments the client device comprises a sensor and the value of the information element is determined by an output of the sensor.

In some embodiments the client device controller is configured to set the value of the information element based on a random number generated or acquired by the client device controller.

In some embodiments the client device comprises an interface for receiving classical communications.

In some embodiments the client device controller is configured to: store values of the information elements corresponding to the photon states delivered into the optical communication channel; and receive one or more communications indicating whether or not each of the photon states were successfully loaded into a destination quantum system.

In some embodiments the client device controller is further configured to: receive parity information corresponding to the photon states that were successfully loaded into a destination quantum system; and adjust the stored values of the information elements corresponding to the photon states that were successfully loaded into a destination quantum system based on the parity information.

In some embodiments the client device controller is further configured to assemble a raw encryption key based on the adjusted stored values of the information elements corresponding to the photon states that were successfully loaded into a destination quantum system.

In some embodiments the client device comprises an optical input port connectable to receive pulses of light from an optical communication channel and connected to deliver received pulses of light to the optical attenuator.

In some embodiments the client device comprises a laser light source operable to deliver pulses of light to the optical attenuator.

In some embodiments the controller is configured to set a wavelength of the pulses of light.

In some embodiments the client device comprises a clock wherein the controller is configured to control the clock to synchronize the clock with a clock of another device.

In some embodiments the client device controller is configured to control the plurality of light modulators to time-bin encode the value of the information element in the photon state.

Another aspect of the disclosure provides a system for communicating data among a plurality of client devices. The system comprises a hub comprising a laser light source, at least one optical port, an optical switching network, a plurality of Bell state analyzers (BSAs), a plurality of quantum systems and a controller. Each of the quantum systems is operative to store a qubit state. The controller is configured to: cause quantum states of pairs of the quantum systems to be entangled and, in response to a request to establish communication between a first one of the client devices and a second one of the client devices, configure the optical switching network to provide: an optical connection between the first client device and a first BSA of the hub; and an optical connection between the second client device and a second BSA of the hub. The controller is further configured to control the hub to deliver a first laser pulse to the first client device and subsequently receive from the first client device a first photon state that encodes first information; and directly or indirectly perform a first Bell state measurement (BSM) between the first photon state and a first quantum system of one of the pairs of entangled quantum systems. The controller is further configured to deliver a second laser pulse to the second client device and subsequently receive from the second client device a second photon state that encodes second information; and directly or indirectly perform a second Bell state measurement (BSM) between the second photon state and a second quantum system of the one of the pairs of entangled quantum systems. The first and second client devices are respectively configured to emit the first and second photon states by:attenuating the respective first or second laser pulse to a single-photon-level pulse; and modulating the single-photon-level pulse to yield the respective one of the first and second photon states.

In some embodiments, modulating the single-photon-level pulse comprises selecting a basis from a plurality of bases, and setting one or more modulators to encode a bit value according to the selected basis.

In some embodiments the first and second client devices each comprise a random number generator and a data store.

In some embodiments the bit value is determined based on an output of the random number generator and the first and second client devices are each configured to record the respective bit value in the respective data store.

In some embodiments the first and second client devices are each configured to select the basis based on an output of the random number generator and to store a record of the selected basis in the respective data store.

In some embodiments the first and second client devices each comprise an amplitude modulator and a phase modulator and are configured to modulate the respective first or second laser pulse by setting amplitudes for two time bins according to the respective first or second information.

In some embodiments the first and second client devices each comprise a global phase modulator and are configured to operate the global phase modulator to randomize a global phase of the respective first or second photon state.

Another aspect of the disclosure provides a method for communicating among a plurality of client devices including first and second client devices. The method comprises: causing the first client device to emit a first photon state that encodes first information and directly or indirectly perform a first Bell state measurement (BSM) between the first photon state and a first quantum system of an entangled group of quantum systems; causing the second client device to emit a second photon state that encodes second information and directly or indirectly performing a second BSM between the second photon state and a second quantum system of the entangled group of quantum systems; and sending correlation information based on the outputs from the first and second BSMs to at least one of the first and second client devices.

Another aspect of the disclosure provides a communications system. The communications system comprises a plurality of client devices and a hub device configured for supporting communication between the plurality of client devices. The hub device comprises at least one optical port, an optical switching network, a plurality of quantum systems and a controller. Each of the quantum systems operative to store a qubit state. The controller is configured to, responsive to a request to support communication between a first client device of the client devices and a second client device of the client devices, configure the optical switching network to establish: a first optical connection to support loading a first photon state from the first client device into a first quantum system of the plurality of quantum systems; and a second optical connection to support loading a second photon state from the second client device into a second quantum system of the plurality of quantum systems. The controller is also configured to control the hub to: receive, from the first client device, the first photon state encoding first information, and load the first photon state into the first quantum system; receive, from the second client device, the second photon state encoding second information, and load the second photon state into the second quantum system; perform a parity measurement between the first quantum system and the second quantum system; and communicate a result of the parity measurement to at least one of the first and second client devices.

Another aspect of the disclosure provides a communications system comprising: a plurality of client devices; a hub device configured for supporting communication between the plurality of client devices, and a plurality of quantum systems. The hub device comprises one or more optical ports, an optical switching network, a plurality of Bell state analyzers, a plurality of quantum systems and a controller. Each one of the quantum systems is operative to store a quantum state. The controller is configured to:
(a) entangle quantum states of a pair of the quantum systems to thereby generate an entangled pair of the quantum systems;
(b) responsive to a request to support communication between a first one of the devices and a second one of the devices, configure the optical switching network to establish a first optical connection between the first client device and a first one of the entangled pair of quantum systems, and a second optical connection between the second client device and a second one of the entangled pair of quantum systems;
(c) receive, from the first device, a first photon state encoding first information and perform a first Bell state measurement (BSM) between the first photon state and the first one of the entangled pair of quantum systems;
(d) receive, from the second device, a second photon state encoding second information and perform a second BSM between the second photon state and the second one of the entangled pair of quantum systems; and
(e) perform parity measurement between the entangled pair of quantum systems and communicate result of the parity measurement to at least one of the first device and the second device, wherein steps (a) to (e) are performed in order.

In some embodiments the controller is further configured to select the first one and the second one of the pair of quantum systems based on their proximity to the first client device and the second client device, respectively.

Another aspect of the disclosure provides a system for communicating data among a plurality of client devices. The system comprises a hub comprising at least one optical port, an optical switching network, a plurality of Bell state analyzers (BSAs) and a plurality of quantum systems and a controller. Each of the quantum systems is operative to store a qubit state. The controller is configured to: create entanglement among pairs of the quantum systems and maintain a pool of entangled pairs of the quantum systems wherein quantum states of each of the entangled pairs are entangled; in response to a request to establish communication between a first one of the client devices and a second one of the client devices, configure the optical switching network to route photon states from the first and second client devices to be respectively loaded into first and second ones of the quantum systems of the hub; perform a parity measurement on the loaded first and second information, the measurement consuming entanglement of one of the entangled pairs of the pool; and communicate a result of the parity measurement to at least one of the first and second client devices.

Another aspect of the disclosure provides a method for communicating data between a client device and another device. The method comprises: operating the client device to emit a plurality of photon states that each encode a corresponding first information element into a first optical communication channel connected to the another device; in advance of receiving each of the photon states at the another device, configuring an optical switching network of the another device to attempt to load a next one of the plurality of photon states into the quantum state of a corresponding one of a plurality of quantum systems of the another device; and determining whether or not each of the attempts to load one of the photon states succeeded.

In some embodiments emitting subsequent ones of the photon states from the client device are spaced apart by periods that are individually shorter than a time required to initialize one of the quantum systems of the another device.

In some embodiments the another device is configured to direct pulses of light to the client device and the client device is configured to modulate the pulses of light to create the photon states.

Another aspect of the disclosure provides apparatus having any new and inventive feature, combination of features, or sub-combination of features as described herein.

Another aspect of the disclosure provides methods having any new and inventive steps, acts, combination of steps and/or acts or sub-combination of steps and/or acts as described herein.

Further aspects and example embodiments are illustrated in the accompanying drawings and/or described in the following description.

It is emphasized that the disclosure relates to all combinations of the above features, even if these are recited in different claims.

### Brief Description of the Drawings

The accompanying drawings illustrate non-limiting example embodiments of the invention.
Fig. 1A is a block diagram of an example quantum networking system.
Fig. 1B is a flow chart illustrating an example method for transferring data among client devices using a hub.
Fig. 2 is a schematic diagram illustrating major components of an example hub.
Fig. 3A is a flow chart illustrating main steps of an example method for transmitting information between first and second client devices by way of a hub.
Fig. 3B is a flow chart illustrating an example method for communicating information between first and second client devices which includes steps for addressing failed Bell state measurements.
Fig. 3C is a flowchart that illustrates a method for transferring quantum information from a first client device to a second client device.
Fig.4 is a flow chart that illustrates application of the present technology for quantum key distribution (MDI-QKD).
Fig.5A is a schematic diagram that shows a section of an example hub which includes a plurality of pairs of quantum systems.
Fig. 5B is a schematic diagram that shows a section of an example hub which includes a plurality of pairs of quantum systems that can each be coupled to a Bell state analyzer by operating N×1 switches.
Fig. 6A is a block diagram that illustrates components of an example hub.
Fig. 6B is a schematic cross section of a substrate including a pair of quantum systems and associated systems.
Fig 7A is a schematic diagram showing major components of an example client device that includes a laser light source.
Fig. 7B is a schematic diagram showing major components of an example client device that is configured to generate photon states by modulating light from an external light source.
Fig.8 illustrates the structure of a T centre.

### Detailed Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive sense.

This invention relates to quantum communication networks and methods. One aspect of the invention provides an architecture for a quantum communication network that is scalable, secured, and upgradable without any significant modification to client devices.

Scalability: refers to both user count and network reach (distance coverage). New users can be added to the network without any disruption to existing traffic. The network reach may be expanded without major changes to client devices.

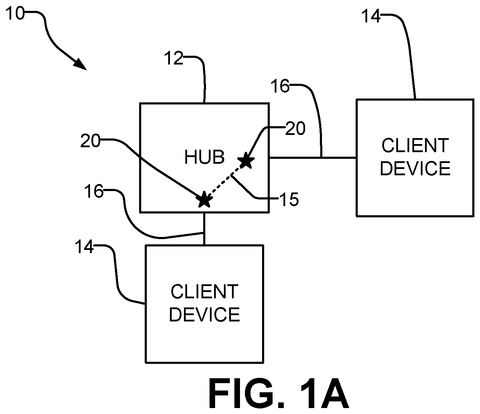

Fig. 1A is a block diagram of an example quantum networking system 10. System 10 comprises one or more hubs 12 that are each in optical communication with a plurality of client devices 14 by optical channels 16. Client devices 14 serve as endpoints from which information is received from or transmitted into system 10. Hub 12 serves to implement physical and software protocols to provide networked quantum resources which facilitate quantum communications among client devices 14.

At a high level, hub 12 connects groups of two or more client devices 14 by exchanging quantum information with the client devices 14 of the group. Advantageously the exchanges of quantum information between different client devices 14 and hub 12 may be performed independently. There is no requirement that these exchanges of quantum information with different client devices 14 coincide in time, occur at the same rate etc.

Hub 12 includes a plurality of quantum systems 20 that may each be used as a quantum memory. Each quantum system 20 can be set to have a quantum state that is one or another or a superposition of a plurality of quantum basis states.

Information may be communicated between client devices 14 and hub 12 in the form of one or more information elements. For example the information may be encoded into qubit states. In some embodiments a client device 14 encodes each information element to be delivered to hub 12 in a photon state.

In an example mode of operation, hub 12 receives information elements from each client device 14 belonging to a group of two or more client devices 14. To receive an information element from a client device 14, hub 12 configures optical components of hub 12 so that information encoded in a photon state incoming from the client device 14 is stored in the quantum state of one of the quantum systems 20.

Information elements received at hub 12 from different client devices 14 may be compared as described herein. Each comparison may be performed in a way that consumes entanglement of two or more of quantum systems 20 within hub 12. Where information being exchanged includes a series of information elements, different groups of entangled quantum systems 20 may be used to compare different sets of the information elements.

Hub 12 is configured to route incoming photon states from client devices 14 such that information elements encoded in the photon states will be stored in selected quantum systems 20. Hub 12 also schedules operations to create entanglement 15 of groups of two or more quantum systems 20 to provide entanglement that can be used (i.e., consumed) when comparing information elements received from different ones of client devices 14.

In some embodiments, hub 12 is configured to assign some of quantum systems 20 to support a communication session between the members of the group of client devices 14. The assigned quantum systems 20 may be used to store information elements received in photon states from client devices so that the information elements may be compared (e.g. by parity measurements). In some embodiments some quantum systems 20 that are assigned to a communication session are used to provide entanglement that may be consumed in comparisons of the information elements received from client devices 14 that are participating in the communication session.

With this arrangement, hub 12 can facilitate a connection between any one of client devices 14 and any other one of client devices 14. Hub 12 may be constructed to allow an arbitrary number of internal quantum systems 20 (limited only by the number of quantum systems 20 and associated devices available in hub 12) to be connected in ways that are invisible to the client devices 14.

Optical channels 16 enable exchange of classical and/or quantum information between client devices 14 and hub(s) 12. Classical information may optionally be exchanged among client devices 14 and/or hubs 12 using other suitable data communications protocols such as wired or wireless communications protocols supported by suitable interfaces in addition to or in the alternative to optical communication of classical information by way of optical channels 16.

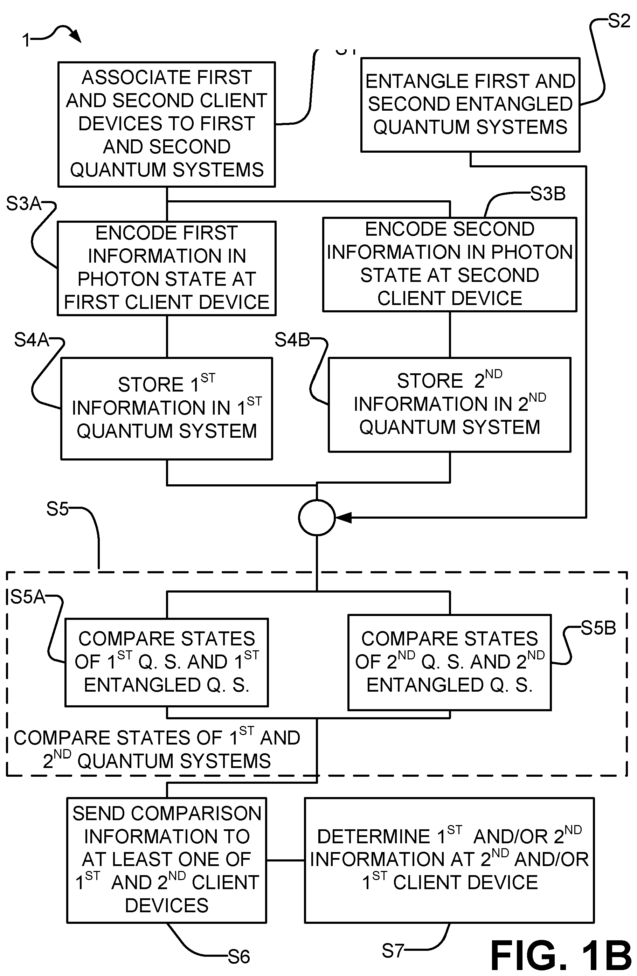

Fig. 1B is a flow chart illustrating an example method 1 that illustrates a possible mode of operation of system 10. In block S1 first and second client devices are respectively associated to first and second quantum systems 20 of hub 10. Block S1 may, for example be triggered by a request from one of the first and second client devices 14 to communicate with the other one of the first and second client devices 14. In some cases, the assignment of the first and second quantum systems 20 to the first and second client devices 14 is made based at least in part on the quality of optical connections between and/or the proximity of first (second) client device 14 and first (second) quantum system 20.

The selection of first and second quantum systems 20 may be made in a way that provides a desired probability of successfully loading quantum information from the first and second client devices into the first and second quantum systems 20 respectively. For example, selection of first and second quantum systems 20 may involve choosing quantum systems 20 for which the probability of successful loading of quantum information from first and second client devices 14 respectively is greater than for other choices of first and second quantum systems from the available quantum systems 20.

In blocks S3A and S3B, the first and second client devices 14 respectively emit a photon state that encodes an information element. In a simple example case the information encoded by each of the first and second client devices is one bit (e.g. the photon state is encoded to have certain characteristics to represent the bit value 1 or certain other characteristics to represent the bit value 0, or for the case of quantum photon states, an arbitrary superposition of bit values 0 and 1. For example, information may be encoded in any of: a time bin; polarization, wavelength or spatial mode of a photon state. It is also possible for a photon state to encode a larger range of values. For example, a photon state may simultaneously have a certain polarization state and/or a certain time bin state, and/or a certain wavelength, and/or a certain spatial mode any of which can be controlled to have a value or superposition of values that represent information.

It is not necessary for the client devices to include quantum memories or apparatus for manipulating quantum states of a quantum system. The photon states may be generated in blocks S3A and S3B by modulating a light beam as described herein. The light beam may originate from a source in a client device 14, a source in hub 12 or a source that is part of another device. In some embodiments one or more of client devices 14 includes a quantum system and the photon state is generated by setting the quantum system to have a specified quantum state and causing the quantum system to undergo a quantum transition which results in emission of the photon state.

In some embodiments (including the embodiment illustrated in Fig. 1B) the information encoded in each of the first and second photon states generated in blocks S3A and S3B is transferred into a quantum state of the corresponding one of the first and second quantum systems 20 of hub 12 at blocks S4A and S4B respectively.

Transferring information from a photon state emitted from a client device 14 into the quantum state of a quantum system 20 may be called "loading" the photon state into the quantum system 20. When a photon state is loaded into a quantum system 20, the quantum state of the quantum system 20 is set to a state which corresponds to the photon state (i.e. the information element encoded in the photon state becomes encoded in the quantum state of the quantum system 20). For example, where a photon state has characteristics that encode the value "1" (or "0") the quantum state of quantum system may have a spin state that represents the value "1" (or "0"). Superpositions of characteristics that can represent bit values may also be used to represent information.

Blocks S4A and S4B which each transfer the information encoded in a respective one of the photon states generated by the first and second client devices into quantum states of first and second quantum systems 20 of hub 12. Blocks S4A and S4B may, for example, load the first and second photon states into the first and second quantum systems via quantum teleportation or direct light-matter interaction.

Blocks S3A and S3B may be performed simultaneously or in any order. Blocks S4A and S4B may be performed simultaneously or in any order.

At block S5 the loaded photon states (i.e. the quantum states of the first and second quantum systems) are compared (e.g. by performing a parity measurement). The parity information resulting from the parity measurement may indicate whether the information encoded in the photon states is the same (e.g. both "1" or both "0" or both in the same superpositions of "1" and "0") or different (e.g. in orthogonal superpositions of "1" and "0"). The comparison of block S5 may be performed using first and second entangled quantum systems of hub 12 that have been prepared to have entangled quantum states. In Fig. 1B the quantum states of the first and second entangled quantum systems are entangled at block S2.

Block S2 may be performed any time prior to block S5 as long as the quantum states of the first and second entangled quantum systems 20 remain entangled until the parity comparison of block S5 is performed (thereby destroying the entanglement). In some embodiments first and second entangled quantum systems 20 are included in a pool of pairs of entangled quantum systems and hub 12 assigns the first and second entangled quantum systems 20 to facilitate communication between the first and second client devices 14. The assignment may, for example, be made at any time prior to block S5.

Block S5 may, for example comprise comparing the quantum states of the first quantum system and the first entangled quantum system in block S5A and comparing the quantum states of the second quantum system and the second entangled quantum system in block S5B. In some embodiments the comparisons of block S5A and S5B each involve performing a Bell state measurement (BSM) on the photon state loaded in a corresponding one of blocks S4A and S4B and a corresponding one of the first and second entangled quantum systems 20. Results of the BSMs may provide parity information for the photon states from first and second client devices 14-1 and 14-2. Such Bell state measurements may be accomplished, for example, via photon emission and optical interference (e.g. at a Bell state analyzer (BSA)), or by directly controlling collocated coupled quantum systems.

The results of the comparison of block S5 are communicated to at least one of the first and second client devices at block S6.

In block S6, information regarding the results of the comparison are delivered to at least one of the first and second client devices. The information may be delivered via a classical data communication channel (e.g. internet, local area network, cellular data, etc.).

In block S7 the information encoded by the first client device 14 at block S3A is decoded at the second client device 14 using a record of the information encoded by the second client device at block S3B in combination with the comparison information that is communicated to the second client device by the hub.

The steps of method 1 may be repeated to transmit additional information elements from the first client device 14 to the second client device 14 and/or from the second client device14 to the first client device 14.

It is not mandatory to first load the first and second photon states into first and second quantum systems 20 and subsequently compare the quantum states of the first and second quantum systems 20 into which the first and second photon states have been respectively loaded. In some alternative embodiments, the loading step is omitted and the first and second photon states are respectively compared directly to quantum states of the first and second entangled quantum systems 20 (e.g. by performing BSMs). However, in typical cases the optical channels between hub 12 and client devices 14 are lossier than optical channels within hub 12. Especially in such cases the approach illustrated in Fig. 1B has the advantage that the entanglement of the first and second entangled quantum systems can be created any time before or even after both of the first and second photon states have been successfully loaded into the first and second quantum systems 20. Thus there is no need to provide entanglement for comparing the quantum states of the first and second quantum systems 20 until after the first and second photon states have been successfully loaded into the first and second quantum systems 20. Using the embodiment of Fig. 1B can simplify scheduling and provision of entanglement and reduces the likelihood that entanglement will be "wasted" as compared to the case where the first and second photon states are compared directly to the first and second entangled quantum systems.

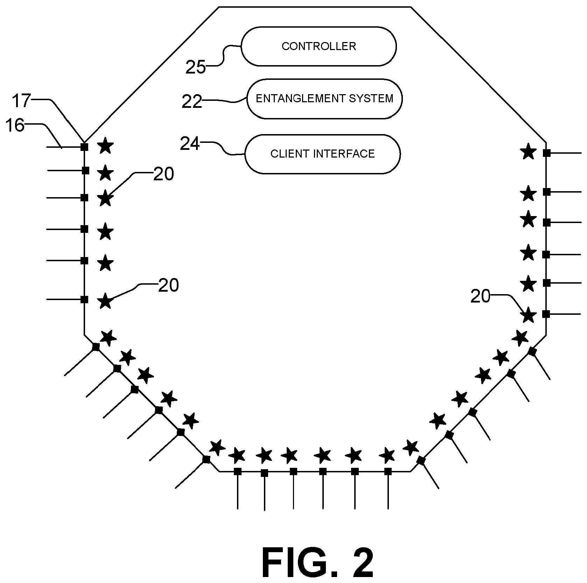

Fig. 2 is a schematic diagram illustrating major components of an example hub 12. Hub 12 includes at least one port 17 (a plurality of ports 17 are shown) which each interface to a corresponding optical connection 16. Hub 12 also includes a plurality of quantum systems 20.

Quantum systems 20 can each store quantum information in the form of a quantum state. Quantum systems 20 may for example comprise particles having intrinsic spins. Such particles can be in quantum states that are spin up or spin down or superpositions of spin up and spin down. Spin states of two or more such particles may be entangled such that the spin states of each of the two or more particles is part of an entangled spin state of the two or more particles.

Since quantum systems 20 can exist in superpositions of different quantum basis states the stored information may be defined by a particular superposition of quantum states. For example, a particular quantum system 20 may have first and second quantum basis states: |*ψ*₁ > and |*ψ*₂ >. Information may be stored in the quantum system 20 by setting the system to a quantum state given by the superposition: *α*|*ψ*₁ > +*β*|*ψ*₂ > where *α* and *β* are complex valued coefficients. For example, |*ψ*₁ > = | ↑> and |*ψ*₂ > = | ↓> where ↑ and ↓ respectively indicate spin up and spin down spin states. As another example, $\left|{ψ}_{1}\right〉 = \frac{\left|↑\right〉 + \left|↓\right〉}{\sqrt{2}}$ and $\left|{ψ}_{2}\right〉 = \frac{\left|↑\right〉 - \left|↓\right〉}{\sqrt{2}} .$ .

Quantum systems 20 comprise matter qubits - as opposed to "flying" qubits (photons). Each quantum system 20 has a quantum state that may be controlled through optical, electrical, and/or magnetic interactions.

Hub 12 includes a controller 25 which is configured to coordinate overall operation of hub 12. Hub 12 also includes a system 22 operable under control of controller 25 to cause quantum states of two or more of quantum systems 20 to be entangled.

"Entanglement" describes the situation in which quantum states of individual quantum systems 20 in a group of two or more quantum systems 20 cannot be described independently of the quantum states of the other ones of the quantum systems in the group. A pair of quantum systems may be entangled ("bipartite entanglement") or three or more quantum systems may be entangled ("multipartite entanglement"). An equivalent definition of an entangled state is a state of plural quantum systems that cannot be factored into states of the individual quantum systems that make it up. For example, two entangled particles may each have a quantum state which is a pairwise superposition of spin up and spin down for both spins while the combined spin of the two particles is constrained to be zero.

"Highly entangled state" means a state that is maximally entangled or close to being maximally entangled. A Bell pair is an example of a highly entangled state.

System 22 may, for example, comprise one or more Bell state analyzer ("BSA") together with one or more quantum control sources (e.g. lasers, arbitrary waveform generators) and an optical switching network configurable to optically connect each of a pair of quantum systems 20 to corresponding input ports of a BSA.

A BSA is an apparatus that performs measurements which project two qubit states onto two-qubit entangled states. A BSA may be designed to make measurements which project onto various choices for the two-qubit entangled states. In some embodiments the two-qubit entangled states are Bell states. In some embodiments the two qubit entangled states are other maximally-entangled states. BSAs in hub 12 may be used, for example, in creating entanglement of quantum systems 20, loading photon states into quantum systems 20 and/or making parity measurements.

In an example embodiment quantum systems 20 are provided by intrinsic spins of T centers and system 22 comprises a Bell state analyzer, optical switches configurable to route photons emitted from quantum systems 20 to the BSA, a laser and a microwave source operable to manipulate quantum states of quantum systems 20 and associated optical and electronic paths, switches and detectors.

In this example, the BSA performs a partial BSM, projecting two incoming photon states that are received at its two input ports onto either of two (of four total) Bell states, simultaneously destroying the photon states by detection. For example a BSA may include an optical mixer (which may, for example comprise a beamsplitter) at which single photon states associated with a first quantum system 20 may interfere with single photon states associated with a second quantum system 20. The BSA may comprise two output ports that are each connected to a corresponding single photon detector. The single photon detectors may be operated to detect photons in patterns that herald entanglement of the first and second quantum systems 20 (or indicate that an entanglement attempt is not successful).

In operation, system 22 may, for example, be controlled to cause the first and second quantum systems 20 to emit photon states that are respectively entangled with the spin states of first and second quantum systems 20 by causing quantum transitions of the first and second quantum systems 20. System 22 may then direct the resulting photon states to respective first and second input ports of a BSA and detect outputs from the single photon detectors of the BSA.

Hub 12 also includes a client interface system 24 that facilitates optical interaction between a client device 14 and a selected one of quantum systems 20 by way of optical signals delivered on optical channels 16. System 24 may, for example comprise an arrangement of optical input ports, optical switches and Bell state analyzers ("BSA"s) which are configured to either or both: cause information encoded in a photon state received from a client device 14 to be loaded into to a corresponding one of quantum systems 20; and compare the photon state to a state of one of quantum systems 20 (e.g. by performing a BSM).

Optical input ports 17 of hub 12 may be shared among plural client devices 14. For example, at any given time, optical channels may be available which are operative to carry photon states from any of a plurality of client devices 14 to one optical input port 17 of hub 12. Hub 12 may track the timing of an upcoming interaction between a particular client device 14 and a particular quantum system 20. Hub 12 may set optical switches to cause a photon that arrives at an optical input port 17 of hub 12 which is connected to receive photons from the particular client device 14 at the expected timing of the interaction to a BSA that is also connected to receive a photon from the particular quantum system 20.

By using the systems and methods described herein, it is possible for information to be privately communicated between two client devices 14 by methods which include entangling pairs of quantum systems 20 within hub 12 and facilitating optical interactions which allow comparison of single photon states that originate from each of the client devices 14 using the entangled quantum systems 20. For example, the techniques described herein may be applied for quantum key distribution (QKD). It is not necessary for hub 12 to be a "trusted" device.

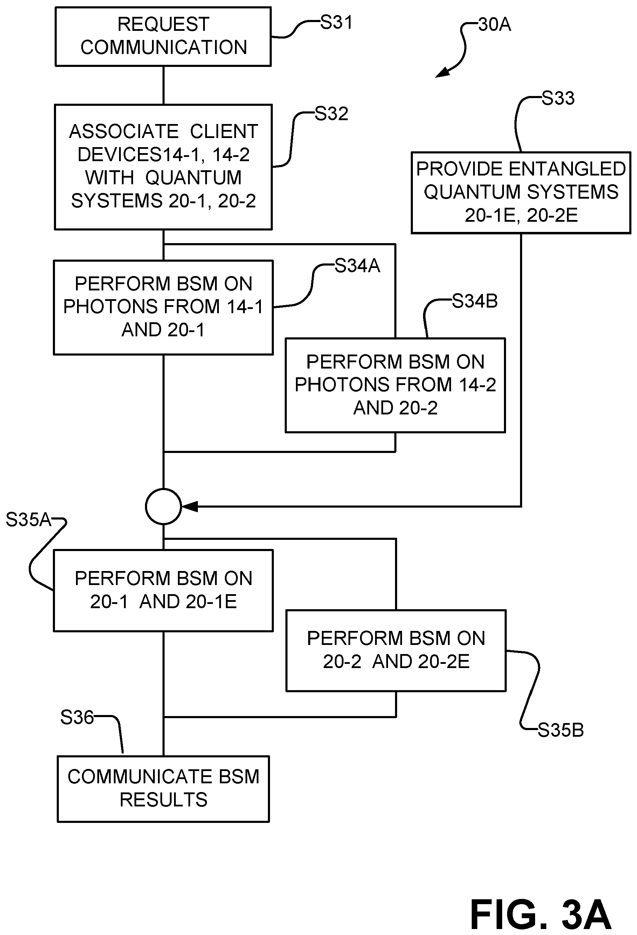

Fig. 3A is a flow chart which illustrates main steps of an example method 30A for transmitting information between a first client device 14-1 and a second client device 14-2 using corresponding quantum systems 20-1 and 20-2 and entangled quantum systems 20-1E and 20-2E of a hub 12.

Block S31 generates a request to establish communications between first and second client devices 14-1 and 14-2. The request may, for example originate from one of client devices 14-1 and 14-2. The request may, for example be delivered to hub 12 by way of optical channels 16 or another data communication system.

Block S32 configures system 24 of hub 12 to associate each of client devices 14-1 and14-2 with a corresponding one of a pair (20-1 and 20-2 respectively) of quantum systems 20.

Block S33 causes system 22 to provide a pair of entangled quantum systems 20-1E and 20-2E. The entanglement of quantum systems 20-1E and 20-2E may be generated at any time prior to blocks S35A and S35B. The entanglement may, for example, be generated in response to the execution of or completion of block S31 or block S32 or block S34A or block S34B. As another example, entanglement block S33 may be performed in the furtherance of an ongoing process in which system 22 creates entanglement of pairs of quantum systems 20. In some embodiments system 22 operates to maintain a pool of pairs of entangled quantum systems 20 and block S33 comprises making a pair of entangled quantum systems from the pool available for facilitating communication between client devices 14-1 and 14-2.

In some embodiments it is likely that either or both of blocks S34A and S34B will need to be repeated a number of times (e.g. due to photon losses) before blocks S34A and S34B are each successfully completed. In such embodiments it may be desirable to delay provision of a pair of entangled quantum systems 20-1E and 20-2E until blocks S34A and S34B are completed. This can optimize the number of communication sessions that hub 12 can simultaneously manage by avoiding tying up entangled pairs of quantum systems 20 in sessions for which blocks S34A and S34B are not yet completed.

In block S34A, the client device 14-1 and quantum system 20-1 is caused to emit a photon state and a Bell state measurement (BSM) is performed on the photon states.

In block S34B, the client device 14-2 and quantum system 20-2 is caused to emit a photon state and a Bell state measurement is performed on the photon states. Blocks S34A and S34B may be performed in parallel or in any order.

It is not necessary that blocks S34A and S34B complete their respective successful Bell state measurement simultaneously. Furthermore since the probability of successfully completing any individual Bell state measurement may be quite low each of blocks S34A and S34B may need to be repeated a number of times before a successful BSM is obtained.

The probability that any individual BSM will succeed depends at least in part on photon losses. The probability may, for example be 50% in cases where there is no loss of photons and every photon is successfully detected and may be far less than 50% where there is significant photon loss.

In some embodiments blocks S34A and S34B are performed independently and are each repeated until a successful BSM is obtained. This offers a large speedup over the case where photons from client devices 14-1 and 14-2 are directly compared. The speedup advantage increases as the probability that the BSM attempts in blocks S34A and S34B goes down. Consider, for example the case where the probability of successfully sending a single photon from a client device 14 to hub 12 and detecting the photon at hub 12 is 1/N. In this case the probable number of tries required to successfully directly compare photons from two client devices 14 at hub 12 scales as N². By contrast, where blocks S34A and S34B are performed independently then the probable number of tries required to successfully complete both of blocks S34A and S34B scales with N as 2N. This difference can be very significant where N is large.

After blocks S34A and S34B are complete the photon states that have been loaded into quantum systems 20-1 and 20-2 of hub 12 can be compared using entanglement of quantum systems 20-1E and 20-2E provided by block S33. As discussed above, block S33 may optionally be performed after blocks S34A and S34B are completed. This allows more efficient use of entangled quantum systems that are available in hub 12 for comparisons.

To achieve a successful BSM, the photon states involved should at least be in the same optical mode. For example, the two photons may share an optical mode between one or more of wavelength, temporal mode, spatial mode and polarization.

In some embodiments the photon states are caused to have the same wavelengths. Electric or magnetic fields may be applied to quantum systems 20-1 and 20-2 in blocks S34A and S34B to shift an emission wavelength of the spins of quantum systems 20-1 and 20-2 to match the wavelength(s) of the respective photons from client devices 14-1 and 14-2.

In blocks S34A and S34B, the photons emitted by client devices 14-1 and 14-2 may be controlled to have a particular quantum state relative to a particular set of quantum basis states. The selection of quantum state for the photons emitted by client devices 14-1 and 14-2 may be used to transfer information between client devices 14-1 and 14-2.

In blocks S34A and S34B the information encoded within the photon states generated by client devices 14-1 and 14-2 are respectively loaded into quantum states (e.g. a spin) of quantum systems 20-1 and 20-2.

In blocks S35A and S35B, BSMs are respectively performed on quantum system 20-1 and 20-1E and on quantum system 20-2 and 20-2E. How the BSMs are performed may depend on the physical relationships between: quantum system 20-1 and 20-1E; and quantum system 20-2 and 20-2E. For example, to perform a BSM on quantum system 20-1 and 20-1E (or 20-2 and 20-2E) where the two quantum systems are physically separated and each optically coupled to a BSA then the BSM may be performed by causing each of the two quantum systems to emit a photon that is entangled with a quantum state of the quantum system, directing the photons to the BSA and detecting the photons at photon detectors of the BSA. As another example, a BSM on quantum system 20-1 and 20-1E (or 20-2 and 20-2E) may be performed by applying quantum gates to the quantum systems (e.g. a C-NOT gate followed by a Hadamard gate and measurement of the quantum systems). Quantum gates may be applied to a pair of quantum systems that comprise spins by applying RF (e.g. microwave) and/or optical pulses as is known in the art. Because of the existing entanglement of the quantum systems 20-1E and 20-2E, the BSM results of S35A and S35B further compare the initially emitted states from client devices 14-1 and 14-2.

In many applications it is desired to communicate multiple information elements between different client devices 14. In some embodiments hub 12 is configured to load a first plurality of photon states from a first client device 14 into a corresponding first plurality of quantum systems 20 and hub 12 is configured to load a second plurality of photon states from a second client device 14 into a corresponding second plurality of quantum systems 20. The loading of the first and second photon states may occur at the same or different times. The first and second pluralities of quantum systems 20 may be initialized simultaneously and ready to be loaded with incoming photon states. Hub 12 may accept incoming photon states for loading as quickly as hub 12 can be reconfigured (e.g. by changing the state(s) of one or more optical switches) to load the next incoming photon state from a client device 14 into the next one of a plurality of quantum systems 20 which have been assigned to be loaded with the photon states from the client device 14. This method for loading photon states into quantum systems 20 is particularly advantageous where a client device 14 is operable to output prepared photon states to hub 12 more rapidly than an individual quantum system 20 of hub 12 can be reset and caused to emit another photon state following a failed attempt to load a photon state from the client 14 into the quantum system 20.

After the photon states generated by client devices 14-1 and 14-2 have been loaded into corresponding quantum systems 20 of hub 12, the resulting quantum states of the corresponding quantum systems 20 may be compared, for example by performing a BSM and results of the comparison may be provided to one or both client devices 14-1 and 14-2.

Some applications (e.g. quantum key distribution, one-way communication) do not require that comparisons are made between specific loaded photon states. For such applications hub 12 may be configured to select pairs of loaded photon states for comparison. Such configurations may be particularly advantageous in cases where there is a significant probability that a photon state emitted by a client device 14 will fail to result in the photon state being loaded into a corresponding quantum system 20 of hub 12. With such configurations, hub 12 may make pairs of photon states that have been successfully loaded into a corresponding quantum system 20, compare the quantum states of the corresponding quantum systems 20 and communicate to one or both of the first and second quantum systems 20 the results of the comparison and also which loaded photon states were compared.

In some embodiments the selection of loaded photon states to be compared is made based at least in part on the availability of an entangled pair of quantum systems 20 that may be consumed to make the comparison. Hub 12 may be configured to preferentially select pairings of loaded photon states for which suitable entanglement is available over different pairings for which suitable entanglement would need to be created (e.g., no pre-existing entanglement).

In some embodiments, hub 12 allocates a first series of quantum systems 20 to receive a loaded photon state from the first client device 14 and a second series of quantum systems 20 to receive a loaded photon state from the second client device 14. The first and second client devices 14 may each, at the same or different rates, at the same or different times emit photon states that encode information elements. Hub 12 may be configured to set optical switches to load each expected incoming photon state into a corresponding quantum system 20. Hub 12 may determine whether each expected photon state was successfully loaded (e.g. based on a result of a BSM performed to load the photon state). When one or more of the first photon states and one or more of the second photon states have been loaded into a quantum system 20 of hub 12 then hub 12 may commence performing comparisons of pairs of the loaded photon states. This is an example of an embodiment in which hub 12 is configured in a way that does not require transmissions of photon states from two communicating client devices 14 to be coordinated at all.

In some embodiments quantum systems 20 of hub 12 are provided by spins in structures that include two or more spins (e. g. electron spins, hole spins and/or nuclear spins) that may be used as quantum systems 20 as described herein. For example, in some embodiments hub 12 comprises multiple structures that each provide an electron spin and one or more nuclear spins. The structures may comprise groups of atoms in a crystalline body. For example, the structures may comprise luminescent centres.

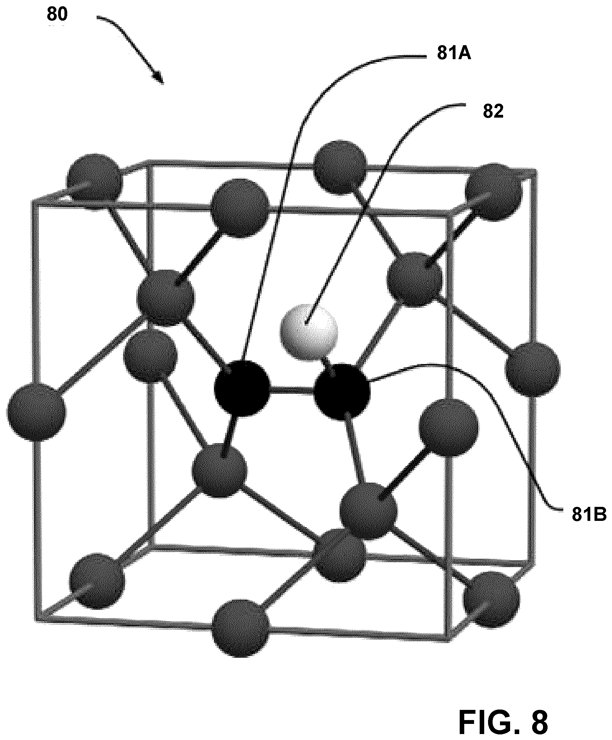

An example of a luminescent centre that provides spins suitable for use as quantum systems 20 is the T centre which is described below with reference to Fig. 8. A T centre includes an electron spin and one or more nuclear spins that may be applied as quantum systems 20.

In some embodiments, nuclear spins of two T centres serve as quantum systems 20-1E and 20-2E in methods like methods 1 and 30. Entanglement of quantum states of the nuclear spins may be achieved by entangling the electron spins of the two T centres and subsequently transferring the entanglement to nuclear spins of the two T centres. The transfer of entanglement may exploit the intrinsic coupling of the nuclear and electron spins of a T centre that arises due to their proximity (e.g. hyperfine coupling) and may be performed by applying quantum controls (e.g. optical, electrical, and/or magnetic) to the T centres. The electron spins may then be applied as quantum systems 20-1 and 20-2 and the nuclear spins may then be used as quantum memories for the existing entanglement, before it is consumed in blocks S35A and S35B to enable the BSMs to correlate the client devices' states.

In block S36 results of the Bell state measurements of blocks S35A and S35B are communicated to at least one of client devices 14-1 and 14-2. The client device(s) 14 that receives the results communicated in block S36 can determine from the data that it encoded on the photon state emitted in block S34A or S34B and the results communicated in block S36 what data was encoded in the photon state emitted by the other client device in block S34B or S34A.

To communicate larger amounts of data between client devices 14-1 and 14-2 the method may be repeated. Results from iterations in which the bases used by client devices 14-1 and 14-2 do not match may be ignored or discarded. For example, the client devices may each keep only data bits (e.g. secure key bits) for which the bases used by client devices 14-1 and 14-2 agree.

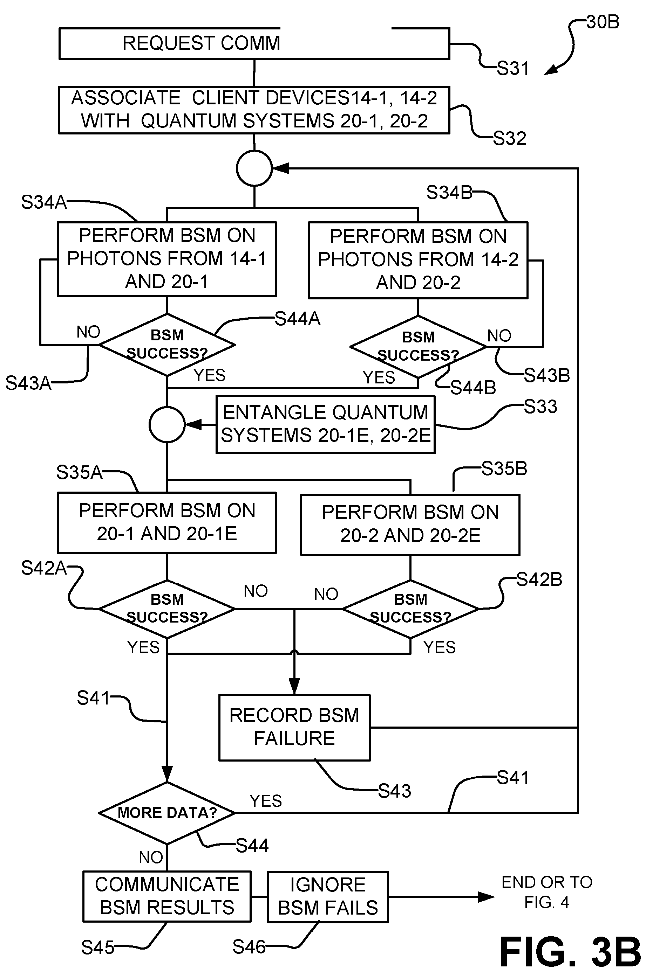

Fig. 3B is a flow chart which illustrates an example method 30B which is similar to method 30A except that it includes loops S41, S43A and S43B.
Each of blocks 34A and 34B is associated with a corresponding one of loops S43A and S43B. Blocks S44A and S44B respectively determine whether the Bell state measurement of block S34A succeeded. If either one of blocks S44A and S44B finds that the Bell state measurement failed (NO result) then method 30B, records the failure, and loops back to and repeats the corresponding one of blocks S34A and S34B. If either one of blocks S44A and S44B finds that the Bell state measurement succeeded (YES result), the corresponding one of loops S43A, S43B records the success. Method 30B then proceeds to blocks S35A and 35B.

Loops S43A and S43B are independent of one another and can each continue until a successful BSM has been achieved.

Loop S41 includes blocks S42A and S42B which respectively determine whether the Bell state measurement of block S35A and block S35B were successful. If either of blocks S42A and S43B finds that the corresponding Bell state measurement failed (NO result) then method 30B proceeds to block S43 which records the failure and then returns to loop S41 to repeat blocks S34A and S34B. If both of blocks S42A and S42B find that the corresponding Bell state measurement succeeded (YES result), loop S41 proceeds to block S44 which determines whether there is additional data to be transmitted.

If block S44 finds that there is more data to be transmitted (YES result) loop S41 returns to repeat blocks S34A and S34B. If block S44 finds that there is no more data to be transmitted (NO result) then method 30B proceeds to block S45. Block S45 communicates the results recorded by block S43 to client devices 14-1 and 14-2. In block S46, client devices 14-1 and 14-2 ignore or ignore and delete stored data relating to cases where the Bell state measurement of block S35A or S35B failed.

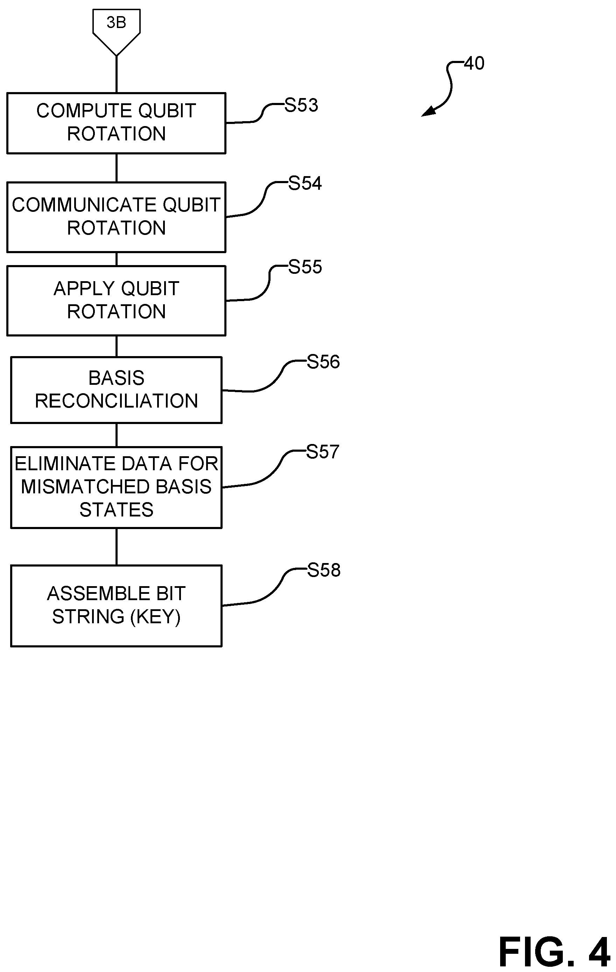

In some embodiments method 30A or 30B is a starting point for longer methods. For example, method 30B optionally continues to the steps of Fig. 4.

For simplicity the foregoing part of this disclosure largely omits details that address the following topics:
a. time synchronization;
b. optical frequency matching;
c. differences in quantum state basis;
d. specific example applications;
e. photon loss, failed entanglement and performance optimization;
f. features of physical arrangements for hubs 12;
g. features of physical arrangements for client devices 14;
h. communications among client devices 14 and hubs 12;
i. control mechanisms; and
j. optional application of multipartite entanglement.
These are discussed in the following sections.

### Time synchronization.

The methods described above involve interfering photon states from client devices 14 with photon states from corresponding quantum systems 20 at a BSA of hub 12. For interference to occur the photon states must arrive at the BSA so that they are present at the BSA at the same time. It is therefore necessary that the system which controls emission of encoded photons from client devices 14 is synchronized with the system which controls emission of photons from quantum systems 20.

In some embodiments clocks of hub 12 and a client device 14 are synchronized to within 10-1000ps (i.e. ±10⁻¹¹ to ±10⁻⁹ seconds). Preferably clocks of hub 12 and a client device 14 are synchronized to within about 10ps (i.e.±10⁻¹¹ seconds) to ensure high quality interference between a photon emitted from the client device 14 and hub 12. Each of hub 12 and client devices 14 may have a clock that operates at GHz speeds at least during interactions between the client device 14 and hub 12.

In some embodiments the clock of each client device 14 is periodically (not necessarily at the same times as interactions between the client device 14 and hub 12) synchronized with respect to the clock of hub 12. The synchronizations are frequent enough such that at any time the clock of a client device 14 and the clock of hub 12 are synchronized to within a desired value (e.g. a value of 1000 ps or less such as about 10 ps or about 100 ps or about 1000 ps).

In general, synchronization involves generating information that allows a particular client device 14 and hub 12 to cooperate so that photons from the client device 14 and a corresponding quantum system of hub 12 can be generated to arrive at a BSA of hub 12 at times that are sufficiently close together that the photons can interfere at the BSA. Synchronization may involve measuring a time required for photons to propagate from the client device 14 to the relevant BSA.

Synchronization may, for example, involve adjusting a "time" or "time base" (e.g. a count of clock cycles) maintained by the client to have a desired value relative to a time or time base maintained by hub 12 and/or storing an offset value that characterizes a difference between times maintained by the clocks of the client device 14 and hub 12. In addition or in the alternative, synchronization may involve: a time delay to be applied: by hub 12 between signaling a client device 14 to send the next photon or receiving a signal from the client device 14 indicating that the client device 14 will be sending the next photon and triggering the quantum system 20 associated with that client device 14 to emit a photon; and/or a time delay to be applied: by a client device 14 between signaling hub 12 to trigger a quantum system 20 to emit a photon or receiving a signal from hub 12 requesting the next photon and sending the next photon to hub 12.

In some embodiments, a time synchronization routine is performed to prepare system 10 for operation. The synchronization routine may, for example be triggered by block S31 or S32. In the synchronization routine time bases of hub 12 and the involved client devices 14 (e.g. client devices 14-1 and 14-2) are synchronized each time a client device 14 is prepared to generate one or more photons to interact with a quantum system 20 of hub 12.

In some embodiments hub 12 and/or client devices 14 are each periodically (not necessarily at the same times as interactions between the client devices and hub 12) synchronized to a highly accurate clock (e.g. an atomic clock). The synchronizations are frequent enough such that at any time the clock of a client device 14 and hub 12 are synchronized to within a desired value (e.g. about 10 ps).

Time synchronization between client devices 14 and hub 12 takes into account the time required for a photon to travel from a client device 14 to a BSA of hub 12. In some embodiments, time synchronization comprises a procedure in which hub 12 generates and sends an outgoing pulse of light to a client device 14 by way of an optical channel 16. At the client device 14 the pulse of light is detected. Either immediately (e.g. by reflection of the pulse of light from hub 12) or after a known delay, a pulse of light is returned to hub 12 from the client device 14. The returning pulse of light is detected (e.g. at a BSA of hub 12).

The relationship between a time determined by the clock of the client device 14 to the time determined by the clock of hub 12 may be calculated from: the times measured by the clock of hub 12 at which the outgoing pulse of light is sent and the returned pulse is detected at hub 12 as well as the known delay (if any) between the outgoing pulse of light being detected at client device 14 and the returned pulse of light leaving client device 14 together with the time determined by the clock of client device 14 at which the outgoing pulse of light is detected at the client device 14. From this same information one can determine when, according to the clock of the client device 14, a photon should be emitted so that the photon will arrive at a BSA of hub 12 at a specific time.

In some embodiments, optical signals sent by hub 12 or client device 14 as part of a synchronization protocol may also trigger or coordinate other actions by a client device 14. For example, a client device 14 may be configured to create a series of photon states that encode information (e.g. qubit states) in response to detecting an optical signal from hub 12, such as one or more laser pulses, which is sent as part of a synchronization protocol. In embodiments where client device 14 encodes information in photon states by modulating pulses of light from an external source, a client device 14 may be configured to prepare to modulate a series of incoming laser pulses in response to detecting a signal such as the one or more laser pulses from hub 12. The laser pulses may be separated by predetermined intervals such that the client device 14 may set modulation parameters in time to apply a desired modulation to each of the laser pulses.

### Compensating for different BSM results

For applications in which hub 12 is required to perform a Bell state measurement between quantum states of two quantum systems 20 that are correlated to quantum states of photons from two client devices 14 (for example MDI-QKD as described herein) it can be necessary to further determine a "rotation" to be applied to one of the client devices' classical bits associated with the photon state that originated from the client device. The rotation involves selectively flipping the state of the bit (e.g. 1 to 0 or 0 to 1) in response to the BSM yielding a certain pattern of photon detections. The rotation is applied to correctly correlate the photon states delivered by the client devices 14. The determined rotation is communicated to one of the client devices 14 which applies the rotation to its classically stored bits. For example, the rotation may be applied when one photon is detected at each photon detector of a BSA and not applied in other cases (e.g. where two photons are detected at one of the photon detectors of the BSA and no photons are detected at the other one of the photon detectors of the BSA).

### Example application for transfer of quantum information among client devices

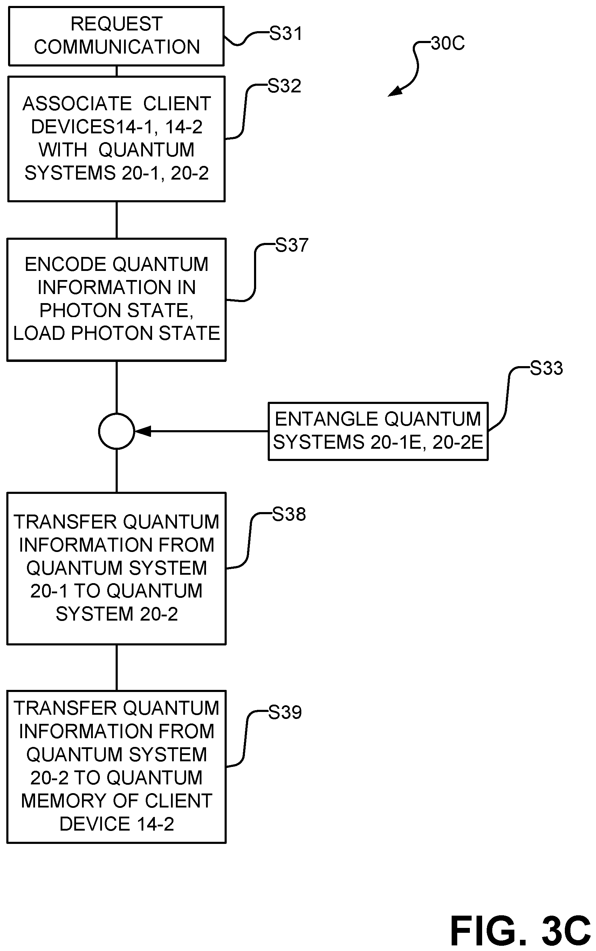

In the case where client devices have the capability of receiving and using quantum information, for example, client devices comprising one or more quantum systems 20 and a controller 25 similar to the controller described with reference to Fig. 2, hub 12 may be applied to transfer quantum information from one client device 14 to another. For example, Fig. 3C is a flowchart that illustrates a method 30C by which a first client device 14-1 may transfer quantum information to a second client device 14-2.

Method 30C starts with blocks S31, S32 and S33 as described above (see Figs. 3A and 3B). In block S37 client device 14-1 generates a photon state which encodes the quantum information to be transmitted. The quantum information is loaded into quantum system 20-1 of hub 12 as described above.

In block S38 the quantum information is loaded into quantum system 20-2. This transfer may, for example be accomplished by performing a Bell state measurement between quantum systems 20-1 and 20-2, mediated by the entanglement of quantum systems 20-1E and 20-2E from S33. The outcome of the Bell state measurement can be shared with the client devices 14 to allow them to apply a corrective qubit rotation to their states.

Finally, in block S39 the quantum information is transferred to a quantum system 35 of client device 14-2 by (1) causing client device 14-2 to emit a photon entangled to the quantum state of client device 14-2, (2) loading information encoded by the photon into quantum system 20-2, and (3) performing a BSM between quantum systems 20-1 and 20-2 to teleport the qubit state stored in quantum system 20-1 to client device 14-2 via the intermediate entanglement of quantum systems 20-1 and 20-2E.

### Example application to quantum key distribution (QKD)

Method 30B may, for example be applied to share an encryption key between client devices 14-1 and 14-2. Bit values of the encryption key may be generated randomly. In some embodiments each client device 14 includes a physical random number generator. Bits output by the random number generator may be used to generate data (e.g. a key) to be shared with another client device 14 and may also be used to select a basis for encoding data in the photon states of photons transmitted by the client device 14 to a hub 12.

In some embodiments the present technology is applied to distribute encryption keys using measurement-device-independent quantum key distribution (MDI-QKD). MDI-QKD does not require hub 12 to be secure. To share a key by MDI-QKD, each of client devices 14-1 and 14-2 may independently encode and transmit photons to hub 12 (as described above in blocks S34A and S34B). The encoding may involve setting a quantum state of the respective transmitted photons based on the value of a bit or other unit of data to be transmitted relative to one of a plurality of bases. Client devices 14-1 and 14-2 may each independently (and randomly) select the basis that will be used in setting the quantum state of each transmitted photon from a plurality of selected bases.

The result of blocks S34A and S34B are that the quantum state of the photon transmitted by client devices 14-1 and 14-2 are respectively transferred to quantum systems 20-1 and 20-2. The results of the Bell state measurement between quantum systems 20-1 and 20-1E and the Bell state measurement between quantum systems 20-2 and 20-2E performed by hub 12 in blocks S35A and S35B indicate the correlation between the quantum states of the photons transmitted by client devices 14-1 and 14-2 in blocks S34A and S34B. However, the actual quantum state of the photon transmitted by client device 14-1 (the quantum state being defined by the selected basis as well as the choice of state in that basis) is known only to client device 14-1 and the actual quantum state of the photon transmitted by client device 14-2 is known only to client device 14-2.

One or both of client devices 14-1 and 14-2 may share with the other one of client devices 14-1 and 14-2 information regarding the basis that was used in encoding the respective transmitted photon. This exchange of information may be made over an unencrypted, authenticated classical channel via, for example, existing classical networks (which is optionally independent of hub 12). In the case where the basis used by client devices 14-1 and 14-2 match, either one of client devices 14-1 and 14-2 which has the results of the Bell state measurement of block S35 can determine the state of the photon originating from the other client device.

Fig. 4 is a flow chart that illustrates an example method 40 which applies the present technology for MDI-QKD. Method 40 begins with blocks that produce the same results as method 30B of Fig. 3B and includes additional blocks.

In block S45, hub 12 informs each of client devices 14-1 and 14-2 whether a qubit loading attempt (blocks S33, S34A and S34B) succeeded or failed. In the case where the qubit loading attempt failed, devices 14-1 and 14-2 optionally perform block S46 which comprises discarding data related to the unsuccessful qubit loading attempt (e.g. data regarding the basis used for encoding the encoded photon state and the information encoded in the encoded photon state for the unsuccessful qubit loading attempt).

Block S53 comprises computing a qubit rotation (bit flip) to be selectively applied to the bit values encoded in the photon states for one of client devices 14-1 and 14-2. Block S53 may for example be performed by a data processor of hub 12. The result of block S53 is communicated to one of client devices 14-1 and 14-2 in block S54.

In block S55 one of client devices 14-1, 14-2 applies the qubit rotation communicated in block S54 to the bit value used for encoding the photon states created in block S34A or S34B.

In block S56 client devices 14-1 and 14-2 perform basis reconciliation. Basis reconciliation involves communicating what quantum bases were used in creating the encoded photon states generated at each client device 14-1 and 14-2 for each iteration of loop S41 (not including iterations for which loading failed - e.g. as indicated by a failed BSM) to the other one of client devices 14-2 and 14-1. Basis reconciliation may be performed on a classical data communication link of any kind. The communications performed for basis reconciliation are not required to be encrypted.

In block S57 each of client devices 14-1 and 14-2 ignores or deletes results of the Bell state measurement of block S36 for which the bases did not agree. Values encoded in photon states in iterations of loop S41 for which the bases did agree (match) may be used as a raw key.

In block S58 the raw key is assembled. In some embodiments the key is made up of the values encoded by one of client devices 14-1 and 14-2 (e.g. client device 14-1). In such embodiments client device 14-1 may assemble the key by concatenating values encoded in photon states emitted by client device 14-1 for each iteration of loop S41 for which loading was successful and the basis states used by client devices 14-1 and 14-2 agreed. The other client device (e.g. client device 14-2) may assemble the same key by concatenating values encoded in photon states emitted by client device 14-2 for each iteration of loop S41 for which loading succeeded and the basis states used by client devices 14-1 and 14-2 agreed. The values may then be modified to generate the key at client device 14-2 based on the corresponding BSM results communicated in block S36. In this way, the results of the Bell state measurement of block S36 for which the basis states used did agree are processed together with the known data encoded in the encoded photon state emitted by client device 14-2 to yield a secure string of bits that is shared between client devices 14-1 and 14-2. The shared bit string may be used in further processing steps (e.g. error correction, privacy amplification) to form a secure key, which can be used to encrypt data for communication between client devices 14-1 and 14-2 over classical data communication channels.

In some embodiments the values used for the key are based on the values encoded in photon states by both of client devices 14-1 and 14-2 in some predetermined pattern. For example, values for alternating positions in the key may be taken from the values encoded by client device 14-1 and the values encoded by client device 14-2 in alternation or in some other predetermined pattern.

MDI-QKD includes privacy amplification steps. Privacy amplification steps can help to reduce the probability that an eavesdropper on the classical communication channel used to perform basis reconciliation could guess the shared bit string (key) to virtually zero. In this manner, the shared bit string is now a secure key, which can be used to secure communications between client devices 14-1 and 14-2.

### Photon loss, failed entanglement and speed improvement;

The above description neglects photon losses. Photons that are intended to be generated may not, in fact be generated. Photons may be lost in an optical channel 16, optical components of hub 12 and/or optical components of a client device 14. Photons that arrive at a single photon detector may fail to be detected. The likelihood that any photon will be lost before it reaches an intended destination (e.g. a photon detector of a BSA) depends on the nature of optical paths taken by the photon as well as environmental factors such as temperature. Even under the most ideal conditions there is no guarantee that any step that involves a single photon (e.g. blocks S33, S34A or S34B of Fig. 3A) will be successful.

In some embodiments, hub 12 is configured to handle cases where, as a result of photon loss or other effect the transfer of data to hub 12 from one or both clients 14-1 and 14-2 has failed or a measurement (e.g. a Bell state measurement) made by hub 12 on that data has not succeeded.

The loss of a photon may be observed by a pattern of photon detections by a BSA. In some embodiments, where a BSA detects no photons or only one photon it may be assumed that a photon has been lost. However, in some other embodiments, the BSA may only succeed where only a single photon is received, such as is described previously with reference to Fig. 3A. In response to determining that a BSM has failed, hub 12 may notify the relevant client 14 of the failed BSM, thereby allowing the client 14 to delete records relating to the failed BSM. Hub 12 may also signal that client 14 should try again to transfer quantum data to hub 12. These steps may be repeated until a successful BSM has been achieved. This may be called "photon success sifting".

In some embodiments hub 12 detects lost photons by monitoring the outputs of a BSA used to compare encoded photons from client devices 14 and photons from quantum systems 20. Where those outputs indicate a missing photon or other problem hub 12 may signal the affected client device(s) 14 by sending photon success sifting messages. The client device(s) 14 may use the signals from hub 12 to determine which events of data transmission failed. The failed events may be ignored (e.g. as described above for the case of MDI-QKD).

Because success sifting messages between hub 12 and individual client devices 14 can be one-way communications, computing and communication load on the client devices 14 is reduced. In some embodiments success sifting messages are provided in the form of optical pulses delivered from hub 12 to one or more client devices 14. These messages may be detected, for example, by a classical photodetector arranged to detect light incident at a client device 14 on an associated optical connection 16 along the optical path. In some embodiments light used to deliver the success sifting messages is provided by the same light source (e.g. laser) of hub 12 that is also used to optically excite quantum systems 20 and/or to provide light for modulation at the client device 14. In alternative embodiments hub 12 may deliver success sifting messages by an alternative data communication channel which may be a classical data communication channel.

If a step fails then one option is to start again by repeatedly performing any required initialization and performing the step until the step succeeds (e.g. as indicated by detecting a pattern of photon detections at a BSA that indicates that the step has succeeded. This approach may be too slow for many applications. For example, by far the most time consuming part of block S33 (establishing entanglement of two quantum systems 20) may be initializing the quantum systems 20 to have quantum states that are suitable for receiving loading of a photon state or quantum states that are suitable starting point for a heralded quantum entanglement protocol. If loading of a photon state or completion of a heralded entanglement protocol fails because a photon is lost then starting over by re-initializing the relevant quantum system(s) will add significant latency. For example loss of a photon could significantly delay completion of block S33. Similarly, loss of a photon in one or both of blocks S35A and S35B would require repeating block S33 and blocks S34A and S34B.

In preferred embodiments of the present technology, hub 12 includes a large number of quantum systems 20 and system 22 is configured to:
- maintain a supply of quantum systems that are initialized to receive loading of photon states from client devices 14; and/or
- maintain a supply of quantum systems 20 that have been initialized for entanglement with another one of the quantum systems and/or a supply of pairs of quantum systems that have been entangled.
Hub 12 may then be configured to:
- switch to another quantum system that is initialized to receive loading of a photon state from a client device as soon as an immediately previous photon state from the client device has already been loaded into another quantum system 20 or the immediately previous photon state from the client device has failed to be loaded into another quantum system; and/or
- switch to a different pair of entangled quantum systems 20 in the event that a step involving one pair of quantum systems 20 fails.

Even in the absence of photon losses and failed entanglements latency of communications between client devices 14 mediated by hub 12 may be dramatically reduced by serially using different pairs of entangled quantum systems 20 to transfer data as described herein since transmission of a next piece of data (whether a bit of a key, qubit, bit or section of other data or the like, depending on the application) can proceed before the pair of quantum systems 20 used to transmit the current piece of data have been reinitialized and entangled.

In some embodiments a controller of hub 12 sets an order for existing pairs of entangled quantum systems 20 and is configured to switch to the next pair of entangled quantum systems 20 upon failure of a step involving a current pair of the quantum systems 20 (e.g. an unsuccessful Bell state measurement between a photonic qubit from a client device 14 and a spin-entangled photon from a quantum system 20) or else to switch to a different pair of quantum systems 20 after each attempt to deliver a photon from the client device 14 to hub 12. Switching among pairs of quantum systems 20 may be done in a manner analogous to a raster scan. The order in which the pairs of entangled quantum systems 20 are used may be determined in advance or in real time as the pairs of entangled quantum systems 20 are being used.

It is not necessary that quantum systems 20 are explicitly paired in advance such that entanglement is only created between predetermined pairs of quantum systems 20. In some embodiments hub 12 is configured in a way that allows at least some quantum systems 20 to be entangled with any of plural other ones or all other ones of quantum systems 20. Once a plurality of entangled pairs of quantum systems 20 has been created and/or a plurality of quantum systems 20 are available to be entangled to create entangled pairs of quantum systems 20 hub 12 may determine which pairs of quantum systems 20 that are or are available to be entangled will be assigned to facilitate exchange of information between which client devices 14.

Whenever a quantum system 20 is prepared in a quantum state the fidelity of the quantum state decreases over time (e.g. as a result of decoherence). This decrease of fidelity affects the quantum states of quantum systems into which photon states have been loaded as well as quantum systems 20 that have been prepared in entangled states. Hub 12 may take into consideration the lengths of time since information from client devices 14 has been loaded into different ones of quantum systems 20 and/or the lengths of time since pairs of quantum systems 20 became entangled in determining which entangled pairs of quantum systems 20 should be used at what time to compare photon states from different client devices 14. For example, in some embodiments where photon states from different client devices 14 are loaded into quantum systems 20 before being compared, the comparisons may be performed (and entanglement for performing the comparison may be provided) in an order such that those pairs of loaded quantum systems 20 for which loading was performed most recently (loading of either quantum system 20 of the pair) will be performed before comparison of quantum states of quantum systems 20 for which loading was performed longer ago.

A pair of quantum systems 20 that is involved in a failed step may each be subsequently reinitialized and made available to be entangled with another quantum system 20 (the pair of quantum systems 20 may be re-entangled with one another or with different other quantum systems 20) and added to the pool of entangled pairs of quantum systems 20.

By switching to the next pair of quantum systems 20 as a client device 14 emits encoded photon states higher communication rates may be achieved. In some embodiments, plural or multiple Bell state measurements may be performed nearly simultaneously.

In some embodiments a controller of hub 12 actively controls raster scanning of the quantum systems 20 into which hub 12 will attempt to load a series of incoming photon states from a client device 14 (e.g. by directing incoming photon states to a first input of a BSA and successively coupling to a second input of the same BSA different ones of quantum systems 20 that have each been initialized to receive loading of the incoming photon states).

In some embodiments, the process takes as inputs outputs of photon detectors of the BSA. If the BSA outputs indicate that a Bell state measurement has failed the controller may switch to the next initialized quantum system 20 for the next loading attempt and initiate reinitialization of the currently associated quantum system 20. Until the reinitialization is complete the controller may avoid use of any quantum systems 20 that are being reinitialized. Once the reinitialization of a quantum system is complete the quantum system 20 may be again included in the pool of available quantum systems 20 over which raster scanning may be performed.

In some embodiments raster scanning of quantum systems 20 into which hub 12 will attempt to load photon states from client devices 14 is performed independently of the success or failure of any individual loading attempt. For example, hub 12 may automatically arrange optical channels to load incoming photon states into different quantum systems 20 in different time windows.

If the BSA outputs indicate that a Bell state measurement has succeeded the controller may avoid use of the associated pair of quantum systems 20 until a transfer of data by way of the associated pair of quantum systems 20 has been completed and the associated pair of quantum systems 20 have been reinitialized.

In some embodiments the speed at which data is transferred from a first client device 14-1 to hub 12 is different from a rate at which the data is transferred from hub 12 to a second client device 14-2. For example, a first client device 14-1 may emit encoded photon states and hub 12 may load the encoded photon states into a series of pairs of entangled quantum systems 20 at a first rate and the information stored in the series of quantum systems 20 may subsequently be transferred to a second client device 14-2 at a rate that is greater than, less than or equal to the first rate. The series of pairs of quantum systems 20 can effectively act as a buffer. As another example, where hub 12 is being used to share a key by MDI-QKD first and second client devices 14-1 and 14-2 may be configured to transmit to hub 12 photons that are encoded in different bases at different rates.

### Compensating for differences between quantum systems 20

Different ones of quantum systems 20 of hub 12 may have different energy levels, for example as the result of local environmental differences. However, a BSM between two photons typically requires the two photons to have the same wavelength. A system as described herein may be designed to mitigate this issue, for example by:
- controlling quantum systems 20 to emit photons of the same wavelength (e.g. by varying an electrical or magnetic field at the location of a system 20 or varying a strain in a substrate in which a system 20 is located).
- controlling a light source to emit light for modulation by the client device 14 that has a wavelength that matches that of photons emitted by a quantum system 20 currently associated with the client device 14. The light source may be part of the client device 14 or external to client device 14.
- causing client device 14 to emit a sequence of photons that have wavelengths according to a list and at hub 12 routing each of the photons to a BSA coupled to a quantum systems 20 that emits photons at the same wavelength as the current photon from the client device 14.

To facilitate this wavelength matching between photons from client devices 14 and photons from quantum systems 20 of hub 12, hub 12 may maintain calibration information such as information which indicates the wavelengths of photons emitted by different quantum systems 20, control inputs to cause a light source external to a client device 14 to deliver light having a specific wavelength to the client device 14, control inputs to cause specific quantum systems 20 to emit photons having specific wavelengths etc.

### Physical arrangements for hubs

As described above, hub 12 includes a potentially large number of quantum systems 20 and a number of BSAs which may be applied for entangling quantum states of pairs of quantum systems 20. These elements and the optical network that provides optical connections between these elements may be arranged in any of a variety of ways.

Switching among different pairs of quantum systems 20 to manage data passed to hub 12 from client devices 14 in encoded photon states (e.g. by raster scanning) may be performed using an active switching network to actively route incoming encoded photon states from client devices 14 to BSAs coupled with paired quantum systems 20 that have been initialized for an attempt to transfer the quantum state of the incoming encoded photon state to the quantum system 20.

In some embodiments a dedicated BSA is provided for each pair of quantum systems 20. Quantum systems 20 of each pair may be coupled to the corresponding BSA by high quality low-loss optical channels. Since each pair of quantum systems 20 has a dedicated BSA in such embodiments it is not necessary to provide switches between quantum systems 20 of one of the pairs and the corresponding BSA that is used to entangle the quantum states of the pair of quantum systems 20. This increases the likelihood that an attempt to entangle quantum states of any of the pairs of quantum systems 20 will succeed.

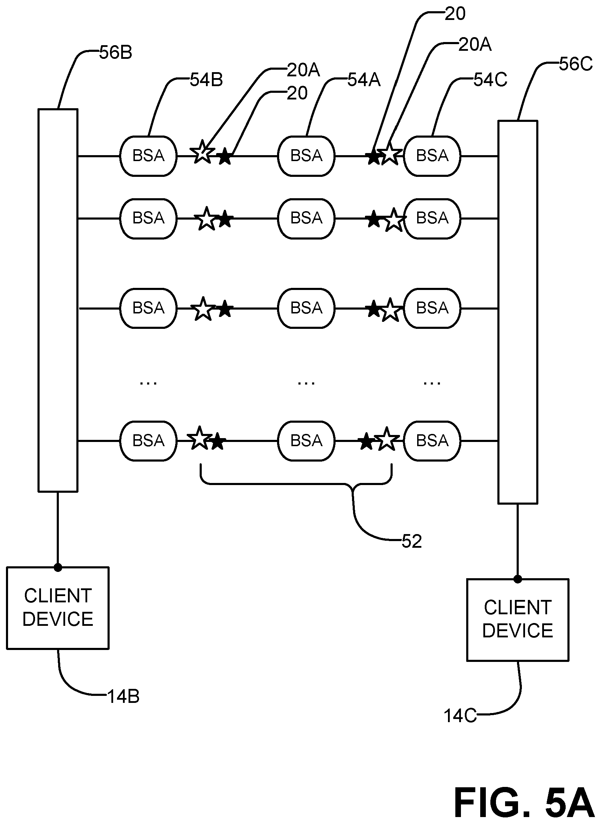

Fig.5A shows schematically a section of an example hub 12 which includes a plurality of pairs 52 of quantum systems 20 that are each optically coupled to a corresponding dedicated BSA 54A. Any number of pairs 52 may be provided. In Fig. 5A there are N pairs 52 (where N is an integer and N≥2).

Fig. 5A also shows BSAs 54B and 54C that can each be connected to perform Bell state measurements for photons originating from a client device 14 and either a corresponding quantum system 20 of one of pairs 52 or a corresponding additional quantum system 20A. In Fig. 5A one BSA 54B or 54C is coupled to each quantum system 20 of each pair 52 (one BSA 54B and one BSA 54C per pair 52). Any of BSAs 52B may be connected to receive photons from a first client device 14B by operating a 1×N switch 56B. Any of BSAs 52C may be connected to receive photons from a second client device 14C by operating a 1×N switch 56C.

In some embodiments quantum systems 20 are logically arranged in an N × 2 array. The quantum systems are optionally also physically arranged in an N × 2 array. In such embodiments the quantum systems 20 may be paired in the smaller dimension of the logical array (2). In such embodiments the quantum systems 20 may be ordered, for example in a direction along the wide dimension of the logical array (N). As it becomes necessary to switch to a new entangled pair of quantum systems 20 the next pair in the order may be selected.

With the apparatus of Fig. 5A, switches 56B and 56C may be controlled to select which pair 52 of quantum systems are used to compare corresponding photon states originating from client devices 14B and 14C. Switches 56B and 56C may be controlled to direct corresponding incoming photon states received in sequence from each of client devices 14B and 14C respectively to a BSA 54B and a BSA 54C that correspond to one of pairs 52. For example, if each pair 52 is identified by a different index in the range of 1 to N, then switches 54B and 54C may be set to direct first photon states from client devices 14B and 14C respectively to a BSA 54B or a BSA 54C associated with a pair 52 corresponding to index "1", second photon states from client devices 14B and 14C respectively to a BSA 54B or a BSA 54C associated with a pair 52 corresponding to index "2", and so on. The quantum systems into which incoming photon states from client devices 14B and 14C are loaded may, in this manner be "raster scanned" across all or a subset of the available pairs 52. It is not mandatory that first photon states from client devices 14B and 14C are received at the same time. It is not mandatory that the indices are assigned to pairs 52 in any particular order.

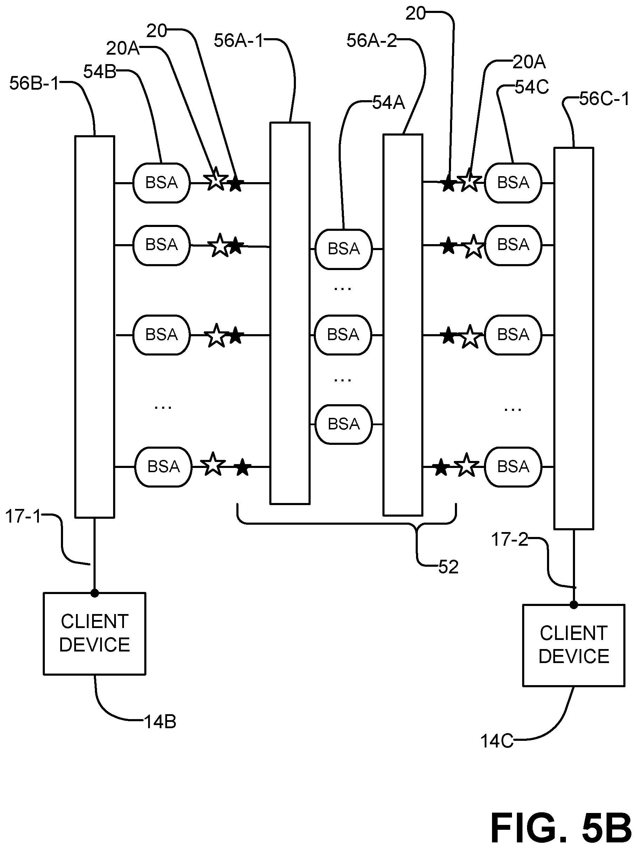

Fig. 5B shows schematically a section of another example hub 12 which includes a plurality of quantum systems 20 that can each be coupled to one of one or more BSAs 54A by operating N×M switches 56A-1 and 56A-2 where M≥1. In the embodiment of Fig. 5B, a BSA 54B can be coupled to receive photons from one quantum system 20 (or 20A, when present) of any of pairs 52 by a 1×N switch 56B-1 and to receive photons from a first client device 14B. A BSA 54C can be coupled to receive photons from another quantum system 20 (or 20A, if present) of any of pairs 52 by a 1×N switch 56C-1 and to receive photons from a second client device 14C.

Fig. 5B is an example of a hub in which an optical switching network is operable:
- to load plural photon states received from client devices into corresponding plural quantum systems 20 (or 20A) - where the quantum system 20 or 20A into which any one of the photon states is loaded is selected, for example, by operating switch 56B-1 and/or 56C-1; and/or
- to create entanglement allowing comparison of the quantum states of any two of the plural quantum systems 20 (or 20A) - for example by an optical entanglement protocol using optical channels selected using optical switches 56A-1 and/or 56A-2.

A controller may control switch 56B-1 so that for each of a sequence of windows in which photon states are expected to be received from a client device (e.g. 14-1) in optical connection with port 17-1 any incoming photon state is directed to a selected one of BSAs 24B such that the photon state may be loaded into the quantum system 20 (or 20A) associated with the selected one of BSAs 24B. In this way a sequence of incoming photon states may be quickly raster scanned for loading into a sequence of different quantum systems 20 (or 20A). Similarly, photon states received at port 17-2 in different time windows may be loaded into a quantum system 20 (or 20A) associated with one of BSAs 54C by controlling switch 56C-1. It is not necessary that photon states be received from client devices 14-1 and 14-2 at the same time or at the same rate or that time windows used for control of switches 54B-1 and 54 B-2 are the same or even synchronized with one another. It is not necessary that the quantum systems 20 (or 20A) into which corresponding photon states from client devices 14-1 and 14-2 are loaded have any particular relationship to one another as long as it is possible to create entanglement that can be used to compare the loaded corresponding photon states. The entanglement may be created before, during or after loading of the photon states into quantum systems 20 (or 20A).

A controller of hub 12 may keep track of which photon states have been successfully loaded into which quantum systems 20 (or 20A). Depending on the communication protocol being implemented, the controller may, for example, match for comparison successfully loaded photon states from client devices 14-1 and 14-2:
- that correspond (e.g. occupy matching positions in sequences of photon states generated by client devices 14-1 and 14-2);
- that do not necessarily correspond to one another; or
- for which there already exists entanglement that may be applied to compare the loaded photon states.
The controller may subsequently communicate information to one or both of client devices 14-1 and 14-2 indicating which photon states were or were not successfully received, results of comparisons of the photon states and (if not already known to the client device(s) 14-1 and 14-2) which successfully loaded photon states were compared.

In any of the embodiments described herein it is not mandatory that each quantum system 20 of a pair 52 of quantum systems 20 of hub 12 is connected to or connectable to a BSA. This is because the quantum states of two quantum systems 20 may be entangled by entanglement swapping (quantum teleportation). By this mechanism, entanglement of a pair 52 of quantum systems 20 may be generated as described above and then transferred to a different pair of quantum systems 20. The different pair may include one or none of the quantum systems 20 of the original pair.

Quantum states of two quantum systems 20 that are not directly coupled via a BSA may be entangled by entanglement swapping. The entanglement swapping may involve a single intermediate quantum system 20 (single hop) or multiple intermediate quantum systems 20 (multi-hop). A controller 25 of hub 12 may be configured to generate or use a map which indicates which quantum systems 20 (and/or 20A if present) will act as intermediaries for entangling a pair made up of two selected quantum systems 20 by multi-hop entanglement swapping. This map may be generated any time prior to performing the entanglement swapping.

Entanglement swapping may, for example, be performed to entangle quantum states of two quantum systems 20-X and 20-Y by steps that include:
- Entangle the quantum states of quantum systems 20-X and 20-P and also entangle the quantum states of quantum systems 20-Y and 20-Q. These entanglements may be achieved using BSMs as described above.
- Perform a BSM between quantum systems 20-P and 20-Q.
- Based on the result of the BSM between quantum systems 20-P and 20-Q perform a rotation on the quantum state of quantum system 20-X.
An example method that may be used for of entanglement swapping mediated by intermediate quantum systems 20 is described in: *Realization of a multi-node quantum network of remote solid-state qubits* [2102.04471] (arxiv.org).

In some embodiments a plurality of quantum systems 20 is associated with each of a plurality of ports 17 of hub 12. Each of ports 17 may be associated with a corresponding client device 14. In response to determining that a first client device 14-1 is to communicate with a second client device 14-2 Controller 25 of hub 12 may be configured to create entangled pairs 52 of quantum systems 20 where each of the entangled pairs 52 includes one quantum system 20 associated with the port 17 connected to the first client device 14-1 and one quantum system 20 associated with the port 17 connected to the second client device 14-1. In some embodiments the number of entangled pairs to be created is based on an estimate of the number of entangled pairs that will be required to communicate the data in question. For example, where the communication is to establish an M-bit key, one bit is communicated for each successful "loading" cycle, the probability that any individual loading cycle will succeed is *p*₁ and the probability that quantum basis states selected by client devices 14-1 and 14-2 will match for any loading cycle is *p*₂ then controller 25 may prepare Q pairs 52 where Q is given by: $Q = A \frac{M}{{p}_{1} {p}_{2}}$.
where A is a coefficient that has a value large enough to compensate for the uncertainty in the number of pairs 52 that will actually be required to share the M-bit key by way of hub 12.

Once entanglement of a pair of quantum systems 20 has been achieved, each client device prepares a photon state (e.g. a photonic qubit) and sends the photon state to hub 12. Hub 12 causes the entangled quantum systems 20 to each generate a spin-entangled photon. Bell state measurements are performed for each of the photon states received from the client devices 14 and the photon emitted by the corresponding one of the entangled quantum systems 20. These BSMs may be performed directly or else information encoded in the photon states may be temporarily stored in the quantum state of an additional quantum system 20A and the BSMs may subsequently be made on quantum systems 20 and 20A (for example by directing photons from quantum systems 20 and 20A to a BSA or by applying quantum gates to quantum systems 20 and 20A).

Because the clocks of the client device 14 and hub 12 are synchronized, the spin-entangled photon and the incoming photonic qubit from the client device 14 are present in the BSA at the same time and can interfere with one another.

In some embodiments switching among different pairs of quantum systems 20 is performed using a passive frequency demultiplexer to route incoming encoded photon states and photons emitted from corresponding quantum systems 20 to a BSA. In such embodiments wavelengths of photons emitted from quantum systems 20 may be tuned (as described elsewhere herein) and the wavelength of encoded photon states may be tuned to a wavelength for which the photons emitted from a desired quantum system 20 and the encoded photon states from a client device 14 are routed to a BSA where they can interfere with one another such that a Bell state measurement may be performed.

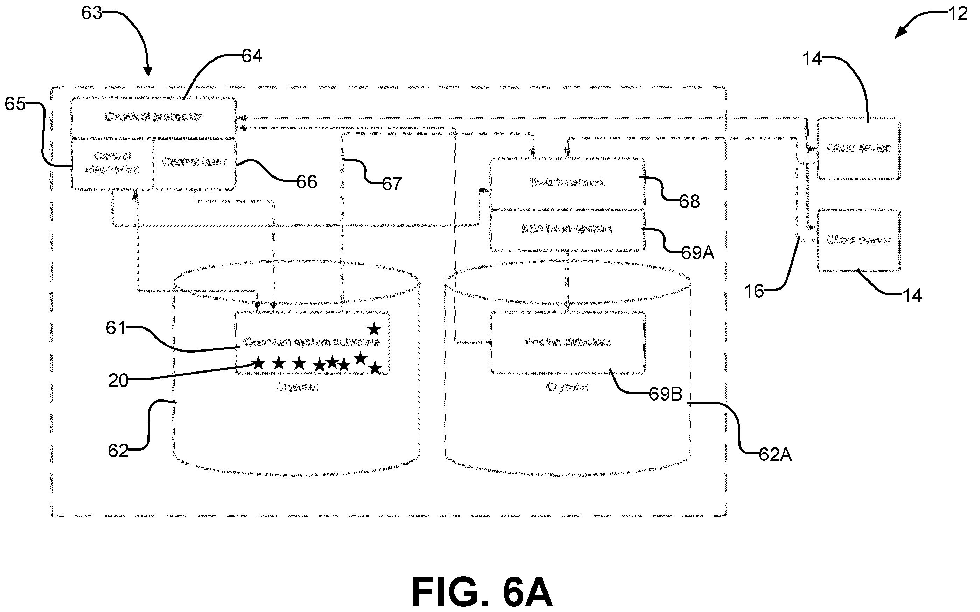

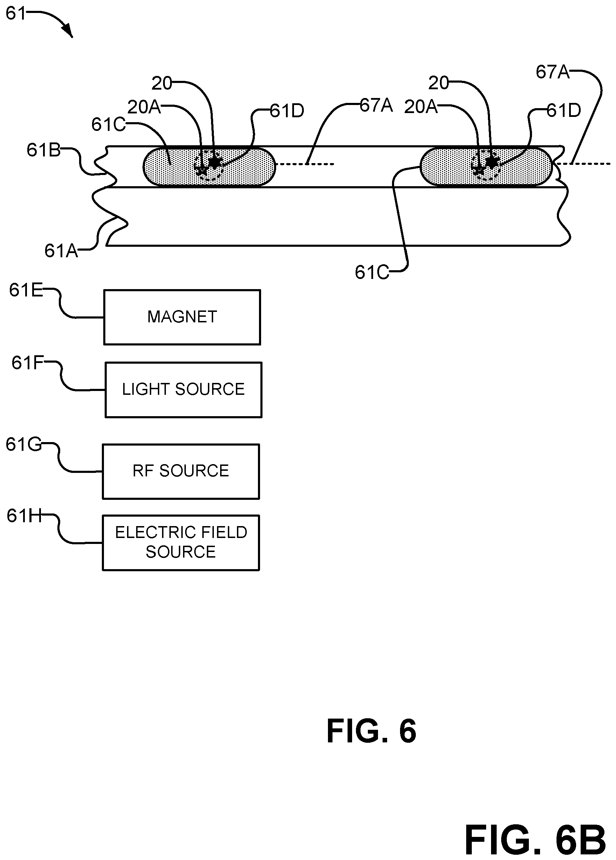

Fig. 6A is a block diagram that illustrates components of an example hub 12. Hub 12 includes one or more hosts 61 that host quantum systems 20 and apparatus for optically communicating with and controlling behavior of quantum systems 20. Fig. 6B shows one example of a host 61 and associated apparatus. Host(s) 61 are maintained at cryogenic temperatures in a cryostat 62.

A control system 63 includes a data processor 64 (which may be a classical data processor) that is configured to coordinate the operation of hub 12. Data processor 64 may, for example, be configured to perform one or more of:
- receive requests from client devices 14 for communication with other client devices 14;
- allocate quantum systems 20 for use in communication sessions between client devices 14;
- run protocols for entangling pairs or larger groups of quantum systems 20;
- perform protocols for coordinating communication sessions including protocols for time synchronization of client devices 14 with hub 12, delivering laser pulses to client devices 14, as required; operating an optical switching network of hub 12 to route photons from client devices 14 to appropriate BSAs, informing client devices 14 regarding successful and/or failed BSMs, optionally facilitating communications between two client devices 14 to share information regarding bases used for encoding data in photons by the client devices 14,
- perform diagnostics to verify proper operation of hub 12. etc.

Controller 63 additionally includes control electronics 65. Control electronics 65 includes electronic circuits for controlling optical switches of hub 12, electric and/or magnetic fields applied to quantum systems 20, Electrical (e.g. RF and/or microwave) sources operable to deliver pulses or pulse sequences to quantum systems 20, cryostats of hub 12, etc.

Controller 63 also includes one or more lasers 66. Lasers 66 may be operated to deliver laser pulses to client devices 14 for communication, time synchronization, and/or modulation by client devices 14.

Quantum systems 20 are optically connected to an optical switching network 68 by plural optical connections (e.g. optical fibers, waveguides) 67. BSAs of hub 12 are made up of beam splitters 69A and single photon detectors 69B. Single photon detectors 69B operate at cryogenic temperatures, which, in this example embodiment, are maintained by a cryostat 62A.

Fig. 6B is a schematic cross section of a portion of a host 61 that may be included in a hub 12. Host 61 includes a substrate 61A that carries an integrated optical layer 61B. Optical layer 61B includes optical elements 61C that facilitate optical coupling of a system 61D that includes at least one quantum system 20 to an optical channel 67A which, for example, comprises an optical waveguide. Optical channel 67A may carry photons emitted from system 61D to optical switching network 68.

Optical elements 61D may, for example comprise an optical resonator that is optically coupled to system 61D and has a resonant wavelength corresponding to an optical transition of quantum system 20A.

In the illustrated embodiment each system 61D includes both a quantum system 20 and a quantum system 20A. Each system 61D may, for example comprise a T centre. An electron spin of the T centre may provide the quantum system 20A and a nuclear spin of the T centre may provide the quantum system 20.

System 61D may be located in or on substrate 61A in close proximity to optical resonator 61C or waveguide 67A or in or on optical layer 61B in or on or in close proximity to optical resonator 61C or optical waveguide 67A.

In addition to enhancing optical coupling between quantum system 61D and optical waveguide 67A, optical resonator 61C may also serve to reduce lifetimes of excited states of system 61D. This can in turn reduce pure dephasing and spectral diffusion that occur as a result of the excited state decaying by emitting a photon. In addition, reducing lifetimes of excited states has the effect of increasing bandwidth of emitted photons, thereby relaxing wavelength stability and synchronization requirements.

Host 61 includes or is associated with systems for setting operating conditions for systems 61D. In the illustrated embodiment these include: a magnet 61E operable to provide a static magnetic field; a light source 61F operable to deliver light having a wavelength selected for optical pumping of quantum system 20A, a RF (radiofrequency) or microwave source 61G operable to provide a desired RF or microwave field or pulse or series of pulses at system 61D, an electric field source 61H operable to provide an electric field at system 61D. RF or microwave source 61G may, for example, comprise a microwave or RF source that may be controlled to set or manipulate a quantum state of quantum system 20A, quantum system 20 and/or system 61D.

### Example quantum systems

In preferred embodiments, quantum systems 20 comprise matter qubits that are embedded in a solid substrate. The solid substrate may be of a crystalline substance such as silicon, diamond or gallium arsenide, for example. Quantum systems 20 may include particles that possess intrinsic spin (e.g. electrons, holes, nuclear spins) and the quantum states of quantum systems 20 may include spin states of one or more such particles.

In some embodiments, quantum systems 20 are provided by an electron or hole spin. In some embodiments the electron or hole spin is associated with a luminescent centre in a substrate. For example, quantum systems 20 may be provided by a spin of a luminescent centre in a substrate. For example, the luminescent centre may comprise a luminescent centre selected from: a defect such as a T centre, an I centre, or an M centre, or a Nitrogen-Carbon centre, or an Al1 or a Ga1 centre, or a radiation damage centre with an unpaired ground state spin; or an impurity such as an atom of selenium or tellurium or sulphur or other double donor impurity.

In some currently preferred embodiments quantum systems 20 each comprise an electron spin of a T centre in silicon. T centres are radiation damage centres in silicon. Fig. 8 illustrates the structure of a T centre 80. A T centre comprises two carbon atoms, one hydrogen atom and an unpaired electron. The T center is a location where a silicon atom in a silicon crystal has been replaced by two carbon atoms 81A and 81B and a hydrogen atom 82 bonded to carbon atom 81B. Carbon atom 81A has one unpaired electron. The spin state of the unpaired electron of carbon atom 8 1A may be used to generate entanglement with another T centre. The nucleus of hydrogen atom 82 may serve as a memory for storing quantum information and/or as a quantum system 20 that may be entangled with a nuclear spin of another T centre.

In some embodiments, one or both of the carbon atoms in a T center are the carbon isotope ¹³ C. Nuclei of carbon-13 atoms have a spin of ½ and may be used as additional quantum memories (by contrast, nuclei of the carbon isotope ¹² C do not have a net spin).

The silicon is preferably isotopically enriched with an isotope of silicon that has zero nuclear spin. For example, the substrate may be made of purified silicon 28 (i.e. silicon that is more than 92.23% silicon 28). In some embodiment the material of substrate 42 is at least 96% or 99% or 99.5% or 99.9% (by number of atoms) silicon 28. They are a high-performance solid-state spin-photon interface with transition wavelength in the telecommunication band.

In some embodiments, quantum systems 20 each include two spins that are coupled, for example by the hyperfine interaction (e.g. an electron spin and a nuclear spin). In a preferred embodiment, the quantum processor is a T-centre quantum processor having a long-lived nuclear spin qubit which may be applied for storing and processing quantum information and a photonically-active electron spin qubit which may be applied for generating entanglement. Entanglement between electron spins of two T centres may be achieved using any suitable entanglement protocol.

Upon successful heralding of entanglement of the electron spin qubit of one quantum system 20 with the electron spin qubit of another quantum system 20, the entanglement is optionally swapped onto the nuclear spin qubits in one or both of the quantum systems 20. The nuclear spin qubit may have a relatively long decoherence time such that the entanglement is preserved. The electron spin qubit may be used to interface with the nuclear spin qubit.

One advantage of T centres for quantum systems 20 is that T centres include spin selective transitions that can result in emission of photons in the telecommunications O band. T centres are also advantageous because of their manufacturability in silicon, and long nuclear spin lifetime.

### Physical arrangements for client devices

### Functionality of example client devices

Client devices 14 may take many forms. Not all client devices 14 in a system as described herein need to be the same. A basic functionality that all client devices 14 have is functionality to encode information in photon states and to transmit those encoded photon states to hub 12. Client devices 14 may have internal light sources (e.g. lasers, single-photon emitters) to provide light for this basic functionality or may rely on an external light source (e.g. a light source in hub 12) to provide this functionality. Client devices 14 optionally additionally include quantum systems that may be applied for storing quantum information. Embodiments that include quantum systems configured to store quantum information may additionally include systems for manipulating stored quantum information (e.g. by applying quantum gates). Some examples of combinations of functionality that a client device 14 may have include:
- Basic client devices 14 that are operable to emit photons with photon states which encode qubit states. Basic client devices 14 may include a light source (e.g. a laser) or a port that accepts external light which the basic client device 14 may attenuate and modulate. Basic client devices may include controllers which include a classical processor configured to control light modulation and to coordinate classical communications with hub 12 and/or other client devices 14. A basic client device 14 optionally includes a classical optical detector which may be applied for receiving information from a hub 12. A basic client device does not require a quantum memory and can be very cost effective.
- Quantum state manipulation client devices 14 include the features of basic client devices 14 and in addition include systems for performing unitary single-qubit operations on photons received from hub 12 before returning the photons to hub 12. A quantum state manipulation client device 14 may include one or more sensors and may perform unitary operations on photons which are selected based on outputs of the sensors. The sensors may, for example sense conditions of: an environment of the client device, a machine or device, a location of the client device 14 or the like. In some embodiments a quantum state manipulation client device 14 is configured to perform unitary operations in a position verification protocol, routing a photonic qubit to one of two verifiers to prove its location between the two verifiers, for example, as described in "A single-qubit position verification protocol that is secure against multi-qubit attacks", Nature Physics **volume 18,** pages 623-626 (2022).
- Memory client devices 14 may have the features of a basic client device 14 or a quantum state manipulation client device 14 plus a one or more quantum memories (i.e. one or more quantum system that is operable to store quantum information such as qubits). A memory client device 14 may be operable to encode photon states based on a quantum state stored in the quantum memory and/or to store in the quantum memory a quantum state encoded in a photon received from a hub 12.
- Quantum processor client devices 14 include the features of a memory client device 14 and in addition include systems for manipulating the states of quantum states stored in the quantum memory. A quantum processor client device may be operable to perform multi-qubit quantum operations on qubit states stored in the quantum memory and to create photon states that encode results of the quantum operations.
- Sensor client devices 14 include the features of a memory client device or a quantum processor client device and additionally include a system operable to consume/manipulate entanglement of quantum states. In some embodiments these capabilities are applied for sensing tasks. By receiving and manipulating single photons from hub 12 that are entangled to quantum systems 20, the sensor client device 14 can manipulate quantum states of the quantum systems 20 by manipulating states of the single entangled photons according to sensor outputs (e.g. by applying unitary operations (e.g. phase shifts) on the single entangled photons based on the sensor outputs).

Any of the above configurations of client devices optionally include a measurement system operable to destructively measure photonic qubits. Including such systems in client devices 14 permits operation in a mode in which a hub 12 is configured to prepare entangled pairs of quantum systems 20 that may be applied in a sequence, cause quantum systems 20 of one of the pairs to emit photons, and deliver each of the photons emitted by an entangled pair of quantum systems to a corresponding one of two client devices 14. The client devices 14 may operate measurement systems to measure photon states of the photons that they have respectively received. The measurements may be made in randomly selected bases. The two client devices may subsequently share information that allows at least one of the client devices to identify those pairs of photon states for which both of the client devices used the same basis for the measurements. The results of the measurements made with the same bases may be used as a raw encryption key.

Any of the above configurations of client devices optionally include a system operable to prepare photonic qubits based on quantum processes such as spontaneous emission and parametric down-conversion. Such a system may facilitate interfacing a hub 12 with client devices 14 that operate in wavelength ranges that are different from that of hub 12. For example, if the photonic qubits are prepared in entangled pairs, and each photon of the pair has a different wavelength, one photon of the pair can interact with a client device 14 to which its wavelength is matched, and the other photon of the pair can interact with the hub 12 to which its respective wavelength is matched. Performing a BSM between the arriving entangled photon and a photon emitted from a quantum system 20 can swap the initial photonic entanglement to entanglement between the quantum system 20 and a quantum system of client device 14.

In some embodiments client devices 14 are configured to emit pulses of light toward hub 12 that have different intensities (different mean photon numbers). Some intensity levels may be used as decoy states as is known in the art. The use of decoy states can increase the security of QKD.

### Optical Wavelength Matching

A photon state originating from a client device 14 should be characterized by a wavelength (equivalent to energy and also to frequency) that is very close to or the same as the wavelength of a photon originating from a quantum system 20 for the two photons to properly interfere with one another in a BSA. Different quantum systems 20 may emit photons that have different wavelengths based on local conditions such as magnetic field, electric field, substrate strain and/or orientation of the quantum system 20.

In some embodiments, a client device 14 includes a light source, such as a laser, that generates photons for sending to hub 12. In such embodiments the frequency of the laser may need to be set and stabilized to match closely enough the frequency of photons emitted by a corresponding quantum system 20 of hub 12. The stabilization may include stabilizing a wavelength of the client device to match an optical transition wavelength of the quantum system 20.

Wavelength stabilization may, for example comprise routinely measuring the excitation probability of the quantum system 20 by pumping quantum system 20 with laser radiation and counting the photons generated. By scanning the laser wavelength and choosing the wavelength with the most photons generated, the laser can be tuned to emit a laser beam that has a wavelength that matches the transition wavelength of the quantum system 20.

In some embodiments the relative optical phase of the laser of the client device 14 is also set to a desired value relative to the phase of photons from quantum system 20. This may be useful for encodings of photon states which are sensitive to the overall phase of the photon state, for example, encoding in the photon number.

### Example implementations for client devices

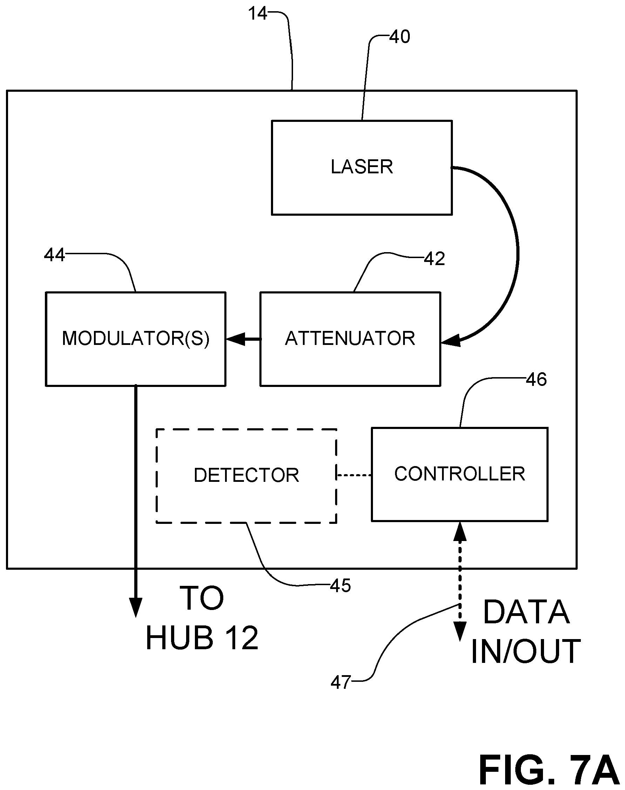

Fig. 7A shows an example client device that includes a laser light source 40 operative to deliver pulses of light to an attenuator 42. Attenuator 42 attenuates the pulse to the level of a single photon to yield a single-photon level pulse. The photon state of the single-photon level pulse is modulated by one or more modulators 44. Modulators 44 may, for example, encode a qubit state (that corresponds to one of two values in a selected basis) into the photon state which is delivered to hub 12 via optical channel 16 as a weak coherent pulse. Modulators 44 may, for example, include modulators that are operable to modulate the phase, amplitude, timing, and/or polarization of the photon state.

In an example embodiment modulators 44 include amplitude modulators that are controllable to prepare time-bin qubit states by setting amplitudes for two time bins according to data (e.g. a bit) to be encoded and imparting a phase shift between the time bins using a phase modulator of modulators 44. In some embodiments modulators 44 include a phase modulator that is operated to randomize the global phase of each photon state. Randomization of the global phase may frustrate phase sensitive attacks.

Fig. 7A also shows an optional optical detector 45 that is operable to detect communications signals from hub 12 in the form of light pulses. A controller 46 controls overall operation of client device 14 and includes a data interface 47 operable to send and receive data from external devices (e.g. hub 12, other client devices 14, other devices).

In some embodiments a client device 14 is operative to generate photons for sending to hub 12 by suitably modulating light received at the client device 14 from an external source. The light may, for example comprise continuous wave (CW) laser light. In such embodiments the external source may set the wavelength of the light to match that of photons emitted by the corresponding quantum system 20 of hub 12.

In some embodiments light originates from hub 12 and is directed from hub 12 to a client device 14 by way of an optical channel 16. The client device 14 may then modulate the light appropriately to generate a photon which is sent to hub 12 by the same optical channel 16 or a different optical channel 16A.

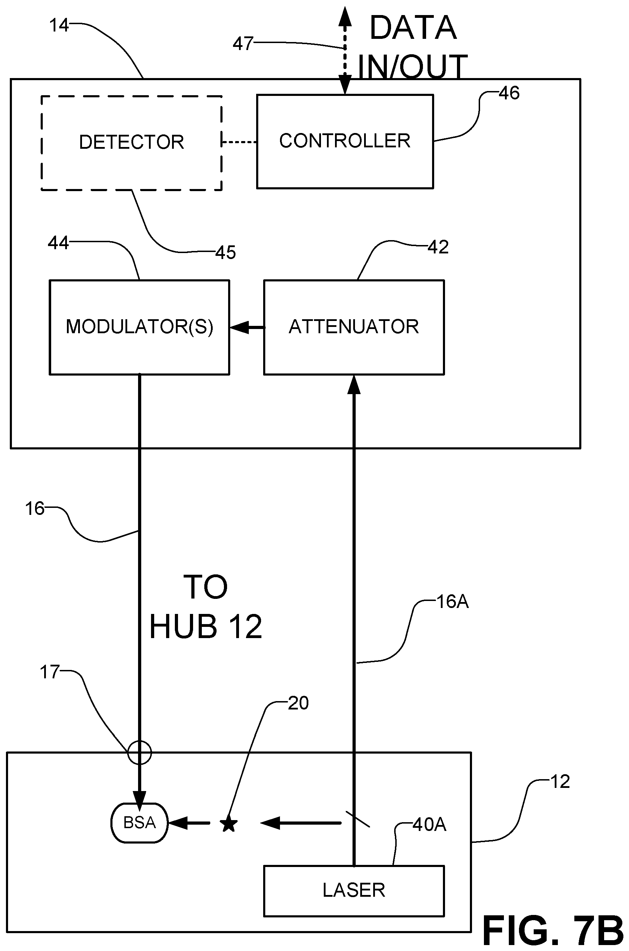

Fig. 7B is a schematic illustration of a client device 14 interacting with a hub 12 where hub 12 includes a laser 40B that is controllable to generate a pulse of light that is delivered to client device 14 by optical channel 16A. In client device 14 the light of the pulse is attenuated by attenuator 42 and modulated by modulators 44 as described above. The resulting photon state is delivered to hub 12 via optical channel 16 as a weak coherent pulse.

In the embodiment illustrated in Fig. 7B, light from laser 40A is also directed to excite quantum system 20 (e.g. in a spin selective transition) to emit a photon. Using the same laser source to excite quantum system 20 and to provide light for modulation by the client device 14 ensures wavelength stability of the photons modulated by the client device 14. In some embodiments hub 12 is controlled to configure the laser source to emit two separate pulses, a first pulse to be modulated by a client device 14 and a second pulse to excite quantum system 20. Durations and waveforms of the first and second pulses may be different. The time between the first and second pulses may be controlled to compensate for the round trip time to the client device.

For example, the same light source of hub 12 that is used to excite a quantum system 20 to emit a photon may be used to generate a pulse of light that is directed to the corresponding client device 14. Generally, the same wavelength that is effective to excite a quantum system 20 in a spin-selective transition so that the quantum system 20 will emit a photon will also sufficiently match the wavelength of the emitted photon. Therefore, the photon emitted from the client device 14 will be automatically wavelength matched to the photon emitted by the corresponding quantum system 20.

### Generation of encoded photon states by client devices

As discussed above, client devices 14 are operable to generate photon states that encode information. This may be done in a wide variety of different ways. In some embodiments information is encoded in the photon states by time bin encoding. In time bin encoding bit values (0 or 1) are encoded by causing a photon or weak coherent pulse to be in an earlier time bin or a later time bin (more generally by placing the photon or weak coherent pulse in a photon state which is given by *α*|*ψe >* +*β*|*ψl* > where α and β are complex valued coefficients and |*ψe* > and |*ψl* > are photon states in which the photon is in the early time bin and the later time bin respectively.

With time bin encoding of bit values, each of the bit values 0 and 1 may be represented by a specific combination of values for α and β. For example, in one basis the bit value 0 may be represented by α=1 and β=0 and the bit value 1 may be represented by α=0 and β=1. In another basis the bit value 0 may be represented by $α = 1 / \sqrt{2}$ and $β = 1 / \sqrt{2}$ and the bit value 1 may be represented by $α = 1 / \sqrt{2}$ and $β = - 1 / \sqrt{2}$. Different bases may be selected so that when the photon state is measured in the wrong basis the measurement gives no information regarding the bit value that was encoded.

Other forms of encoding may be used. For example, data may be encoded in polarization, spatial mode, or frequency states of a photon, or combinations thereof.

### Communications between hub and client devices

Client devices 14 may communicate with one another and with hub 12 for various purposes. Such communications may, for example, include, without limitation:
- client devices 14 communicating with one another regarding basis states that were used to encode data;
- a client device 14 communicating with hub 12 requesting communication with another client device 14;
- hub 12 communicating with a client device 14 to provide information for compensating for differences in quantum state basis between the client device 14 and another client device 14;
- hub 12 communicating with client device(s) 14 for time synchronization.
Any or all of these communications may be delivered by way of classical communications channels. these classical communications channels may include any mode of data communication including optical, wired, wireless data communication modalities.

In some embodiments data communications between client devices 14 and hub 12 are implemented by optical data communications protocols on optical channels 16. Client devices 14 and hub 12 may each include optical detectors operable to detect such optical communications and light sources that may be controlled to generate such optical communications. In some embodiments the light sources are operable both to generate such classical optical communications and to provide light that may be modulated to yield photon states as described herein.

### Classical communications

In some embodiments classical data communications are used to transfer information such as basis reconciliation information or information regarding whether a particular Bell state measurement succeeded or failed among hub 12 and/or client devices 14. Any suitable classical data communications channels may be used to carry such information.

Any classical communications among client devices 14 and hub 12 may use communications protocols that provide one or more of classical error correction and encryption (optional). The classical error correction may be selected to reduce the probability of error to near zero.

### Control mechanisms

Each of client devices 14 and hub 12 includes a controller connected and configured to control operations of the respective hub 12 or client device 14. The controllers may, for example, comprise specifically designed hardware, configurable hardware, programmable data processors configured by the provision of software (which may optionally comprise "firmware") capable of executing on the data processors, special purpose computers or data processors that are specifically programmed, configured, or constructed to perform one or more steps in a method as explained in detail herein and/or combinations of two or more of these. Examples of specifically designed hardware are: logic circuits, application-specific integrated circuits ("ASICs"), large scale integrated circuits ("LSIs"), very large scale integrated circuits ("VLSIs"), and the like. Examples of configurable hardware are: one or more programmable logic devices such as programmable array logic ("PALs"), programmable logic arrays ("PLAs"), and field programmable gate arrays ("FPGAs"). Examples of programmable data processors are: microprocessors, digital signal processors ("DSPs"), embedded processors, graphics processors, math co-processors, general purpose computers, server computers, cloud computers, mainframe computers, computer workstations, and the like. For example, one or more data processors in a control circuit for a device may implement methods as described herein by executing software instructions in a program memory accessible to the processors. The controllers may comprise classical data processors, for example.

A controller for hub 12 may be connected to control optical switches to optically connect BSAs of hub 12 to selected quantum systems 20 and/or to input ports of hub 12. The controller may additionally control the application of quantum gates to quantum systems 20. A controller for hub 12 may include a set of quantum registers which store status information for each of the quantum processors.

Processing performed by the controllers may be centralized or distributed. Where processing is distributed, information including software and/or data may be kept centrally or distributed. Such information may be exchanged between different functional units by way of a communications network, such as a Local Area Network (LAN), Wide Area Network (WAN), or the Internet, wired or wireless data links, electromagnetic signals, or other data communication channel.

It is not necessary for the controllers of client devices 14 to include quantum information processors. Controllers of client devices 14 may comprise classical data processors (e.g. microprocessors) that coordinate operation of the components of client devices 14 to operate as described herein by way of classical control signals. Similarly, it is not necessary for a controller for a hub 12 to include quantum processors or to process quantum information. A controller of hub 12 may be a classical data processor of any suitable kind that coordinates operation of the components of hub 12 to operate as described herein using classical control signals.

Typically the optimum operating conditions for quantum systems 20 of hub 12 are different from those for a controller of hub 12. Consequently the controller and quantum systems 20 may be kept in separate environments. For example, quantum systems 20 may be operated at cryogenic temperatures while the controller for hub 12 may be operated in an ambient temperature environment.

Some aspects of the present technology comprise computer program products. The program products may comprise any non-transitory medium which carries a set of machine-readable, machine-executable instructions which, when executed by a data processor, cause the data processor to execute a method of the invention (e.g. a method for controlling a hub 12, a method for controlling a client device 14, a method for managing communications among client devices 14, a method of QKD, a method of loading photon states or other methods as described herein that may be controlled by programmed data processors) . Program products may be in any of a wide variety of forms. The program product may comprise, for example, non-transitory media such as magnetic data storage media including floppy diskettes, hard disk drives, optical data storage media including CD ROMs, DVDs, electronic data storage media including ROMs, flash RAM, EPROMs, hardwired or preprogrammed chips (e.g., EEPROM semiconductor chips), nanotechnology memory, or the like. The computer-readable signals on the program product may optionally be compressed or encrypted.

Where a component (e.g. a software module, processor, assembly, device, circuit, etc.) is referred to herein, unless otherwise indicated, reference to that component (including a reference to a "means") should be interpreted as including as equivalents of that component any component which performs the function of the described component (i.e., that is functionally equivalent), including components which are not structurally equivalent to the disclosed structure which performs the function in the illustrated exemplary embodiments of the invention.

### Option of multipartite entanglement

In most of the foregoing discussion, communications between pairs of client devices 14 are facilitated by way of corresponding pairs of quantum systems 20 of hub 12 that are entangled with one another. In some embodiments, hub 12 is configured to provide groups of three or more quantum systems 20 that are entangled with one another. Such groups of entangled quantum systems 20 may, for example, be created by entangling two quantum systems 20 as described above and then extending the entanglement to one or more additional quantum systems 20. In such embodiments the shared entangled state of three or more quantum systems 20 may be a "Greenberger-Horne-Zeilinger" state, also known as a "GHZ" state. Such embodiments facilitate protocols involving three or more client devices 14. In such protocols, after a suitable number of quantum devices 20 are entangled at hub 12, each of the participating client devices 14 may be caused to send a photon state to hub 12. At hub 12, each of the photon states is loaded to a corresponding quantum system 20 in hub 12. Hub 12 then performs a joint measurement between the quantum systems 20 that have been loaded with the photon states and a corresponding one of the groups of the entangled quantum systems 20 of hub 12. Results of the joint measurements may then be communicated to one or more of the participating client devices 14 to complete the protocol.

Hub 20 may be configured to simultaneously manage protocols that involve pairwise communication between two client devices 14 mediated by a pair of entangled quantum systems of hub 12 and other protocols that involve three-or more client devices 14 and are mediated by a group of three or more entangled quantum systems of hub 12.

In some embodiments client devices 14 may send hub 12 requests to establish communication with one or more other client devices 14 and hub 12 is configured to generate and/or allocate entanglement to serve the requested number of other client devices 14 and to route photons from the participating client devices 14 appropriately.

### Advantages

Those of skill in the art will understand that the present technology may be applied to provide quantum networking systems that are scalable, secured, and upgradable without any significant modification to components. Here, scalability refers to both user count and network reach (distance coverage). New users can be added to the network without any disruption to existing traffic. For example, a new client device 14 may be added to a system as described herein by making an optical connection between the new client device 14 and a hub 12. Establishing the optical connection may be as simple as connecting an optical fibre between the new client device 14 and an input port of the hub 12 and establishing a classical data connection between the new client device 14 and the hub 12. As soon as those connections have been made the new client device 14 may be applied as described herein to communicate with other client devices 14 by way of hub 12. An enrollment procedure may be performed to facilitate the new client device 14 receiving communications from other client devices 14 by way of hub 12.

Likewise, the network reach can be expanded without major changes to user hardware. The quantum networking systems may be used to transfer data (including encryption keys) securely among client devices 14. A hub 12 may be replaced or upgraded without any significant changes to client devices 14. Many quantum protocols, including QKD, blind computing, and advanced cryptography can be performed with the same client hardware and minimal upgrades to the quantum network.

### Variations

In some embodiments, some or all client devices 14 are integrated with a hub 12. Integrated client devices 14 may communicate with users via classical data communications channels of any kind. In other embodiments client devices 14 are located remotely from hub 12, for example at users' premises or as portable devices that may be plugged into a suitable optical communication network for communication with hub 12.

In some embodiments hub 12 comprises quantum systems 20 and 20A that are arranged in groups where each group comprises a quantum system 20 and a quantum system 20A. For example, quantum systems 20A may be operable as spin-photon interfaces. These spin-photon interfaces may be controlled, for example, to load quantum information from a photon state into an associated quantum system 20. Each group of a quantum system 20 and a quantum system 20A may, for example, be provided by a T-centre.

As another example, a BSM between photon states emitted by two client devices 14 may be achieved by:
- loading the information encoded in the photon state emitted by a first client device 14 to quantum system 20A of one group (e.g. by controlling the quantum system 20A to emit a photon state that is entangled with a state of the quantum system 20A and performing a BSM on the photon state from the first client device 14 and the photon state emitted by the quantum system 20A).
- swapping the encoded information to the quantum system 20 of the same group.
- loading the information encoded in the photon state emitted by a second client device 14 to quantum system 20A of the one group; and
- performing the BSM between quantum systems 20 and 20A of the one group.

A BSM between photon states emitted by two client devices 14 may be achieved, for example, by:
- loading first information encoded in the photon state emitted by a first client device 14 to quantum system 20A of a first group (e.g. by controlling the quantum system 20A to emit a photon state that is entangled with a state of the quantum system 20A and performing a BSM on the photon state from the first client device 14 and the photon state emitted by the quantum system 20A).
- swapping the first encoded information to the quantum system 20 of the first group.
- loading second information encoded in the photon state emitted by a second client device 14 to quantum system 20A of a second group (e.g. by controlling the quantum system 20A to emit a photon state that is entangled with a state of the quantum system 20A and performing a BSM on the photon state from the second client device 14 and the photon state emitted by the quantum system 20A).

- swapping the second encoded information to the quantum system 20 of the second group.
- entangling the quantum systems 20A of the first and second groups (e.g. by controlling the quantum systems 20A of each of the first and second groups to emit photon states that are respectively entangled with the quantum states of the quantum systems 20A of the first and second groups and performing a BSM on the photon states; and
- performing the BSM between quantum systems 20 and 20A of each of the first and second groups.

It is not mandatory that the photon states emitted by client devices 14 or quantum systems 20 are single photon states. In some embodiments client devices 14 and quantum systems 20 provide photon states that are superpositions of zero and one-or-more photons. Client devices 14 may generate photon states in such a superposition of zero and one-or-more photons by attenuating a laser pulse to a level such that the average number of photons in a time window corresponding to the BSM is less than one. In this configuration, the BSM succeeds when exactly one photon is detected from the combination of the two sources. This approach reduces the effect of photon loss on the photon states. However, the quantum state that ends up being loaded into the quantum system 20 depends on the relative phase of the photon states emitted respectively by a client device 14 and the corresponding quantum system 20. This relative phase may be measured (on the photon states themselves or via an out-of-band stabilization laser) and the relative phase may be compensated for by feedback on the optical path length of the connection between either client device 14 and BSA or quantum system 20 and the BSA, for example by a fibre stretcher. For example, a fibre stretcher, or another phase shifter that modifies the optical path length, may be provided in hub 12.

In some embodiments, a plurality of quantum systems 20-1 of hub 12 are loaded serially with photon states from a client device 14. The relative phases of the photon states are measured (e.g. by interfering the photon states with a known phase reference such as a laser or via an out-of-band stabilization laser) and recorded. The known relative phase for each loaded quantum state in a quantum system 20-1 is matched to a similar phase from a quantum system 20-2, which has been loaded using photon states from a second client device 14-2. Because the relative phases matched quantum systems 20-1 and 20-2 are selected to be closely similar, the subsequent state comparison (BSM) is not affected by differences in the relative phases. This approach avoids the need for phase stabilization which may be required in some other approaches.

It is not mandatory in all embodiments that client devices 14 are synchronized with hub 12 such that photon states from client devices 14 temporally overlap to high degree in the BSA with photon states from corresponding quantum systems 20. For example, in some embodiments client devices 14 are configured to send continuous-wave light with, on average, around one photon per time window (determined by the time window of interaction with the photon states from the quantum systems 20). The time window can be defined relative to the decay time of the excited state of the quantum system 20 for the transition that causes the photon state to be emitted. For example, the time window can be set equal to the decay time. In other embodiments, the time window can be set to be less than the decay to ensure that a particular level of fidelity is maintained.

In such embodiments, client device 14 may modulate the continuous wave light such that different portions of the light have different relative phases and intensities. The modulation may be random. Client device 14 records the modulation. The BSA may indicate interference between the continuous-wave light from the client device 14 and a photon state from quantum system 20 (e.g. by detecting photons at both detectors of the BSA). The nature of the photon state originating from the client device 14 may be determined by comparing the information recorded by client device 14 regarding how the continuous-wave light was modulated at different times to the time at which interference was detected at hub 12. This information may be used to look up the phase and amplitude modulation settings that were applied by the client device 14 at the relevant time. The phase and amplitude information may then be used to compute the qubit state that was loaded to the quantum system 20. Where the information is being exchanged for quantum key distribution (QKD) the corresponding basis and bit values may be determined from the phase and amplitude information.

Approaches which modulate continuous wave light as described above may operate with looser timing synchronization requirements between client devices 14 and hub 12 (e.g. from 10-1000 picoseconds to 100-10000 picoseconds). If better interference visibility is required in the BSM than comes naturally from such continuous-wave light, hub 12 may apply amplitude modulation just before the BSM to cause the envelope of photon state wavepackets from the client devices 14 to better match the envelope of the photon state wavepackets from quantum systems 20. While amplitude modulation could be applied to either or both of the photon state wavepackets, in some embodiments hub 12 applies amplitude modulation preferentially to the wavepackets originating from client devices 14.

Where comparisons of quantum states of different quantum systems 20 or 20A comprise parity measurements, the mechanism for performing the parity measurements may depend on the nature of the quantum systems 20 or 20A. For example, in appropriate cases, parity measurements may be performed by:
- a circuit or cavity QED-based parity measurement technique as described for example in David P. Di Vincenzo and Firat Solgun, Multi-qubit parity measurement in circuit quantum electrodynamics, https://arxiv.org/pdf/1205.1910.pdf
- an optical parity measurement for coupled qubits as described for example in: All-Optical Measurement-Based Quantum-Information Processing in Quantum Dots (aps.org) Phys. Rev. Lett. 97, 250504 (2006); and
- Multi-qubit extensions of optical BSAs for example as described in Measuring the parity of $N$ distant atoms with linear optics (aps.org) Phys. Rev. A 89, 044301 (2014).

### Interpretation of Terms

Unless the context clearly requires otherwise, throughout the description and the claims:
- "comprise", "comprising", and the like are to be construed in an inclusive sense, as opposed to an exclusive or exhaustive sense; that is to say, in the sense of "including, but not limited to";
- "connected", "coupled", or any variant thereof, means any connection or coupling, either direct or indirect, between two or more elements; the coupling or connection between the elements can be physical, logical, or a combination thereof;
- "herein", "above", "below", and words of similar import, when used to describe this specification, shall refer to this specification as a whole, and not to any particular portions of this specification;
- "or", in reference to a list of two or more items, covers all of the following interpretations of the word: any of the items in the list, all of the items in the list, and any combination of the items in the list;
- the singular forms "a", "an", and "the" also include the meaning of any appropriate plural forms. These terms ("a", "an", and "the") mean one or more unless stated otherwise;
- "and/or" is used to indicate one or both stated cases may occur, for example A and/or B includes both (A and B) and (A or B);
- "approximately" when applied to a numerical value means the numerical value ± 10%;
- where a feature is described as being "optional" or "optionally" present or described as being present "in some embodiments" it is intended that the present disclosure encompasses embodiments where that feature is present and other embodiments where that feature is not necessarily present and other embodiments where that feature is excluded. Further, where any combination of features is described in this application this statement is intended to serve as antecedent basis for the use of exclusive terminology such as "solely," "only" and the like in relation to the combination of features as well as the use of "negative" limitation(s)" to exclude the presence of other features; and
- "first" and "second" are used for descriptive purposes and cannot be understood as indicating or implying relative importance or indicating the number of indicated technical features.

Words that indicate directions such as "vertical", "transverse", "horizontal", "upward", "downward", "forward", "backward", "inward", "outward", "left", "right", "front", "back", "top", "bottom", "below", "above", "under", and the like, used in this description and any accompanying claims (where present), depend on the specific orientation of the apparatus described and illustrated. The subject matter described herein may assume various alternative orientations. Accordingly, these directional terms are not strictly defined and should not be interpreted narrowly.

Where a range for a value is stated, the stated range includes all sub-ranges of the range. It is intended that the statement of a range supports the value being at an endpoint of the range as well as at any intervening value to the tenth of the unit of the lower limit of the range, as well as any subrange or sets of sub ranges of the range unless the context clearly dictates otherwise or any portion(s) of the stated range is specifically excluded. Where the stated range includes one or both endpoints of the range, ranges excluding either or both of those included endpoints are also included in the invention.

Certain numerical values described herein are preceded by "about". In this context, "about" provides literal support for the exact numerical value that it precedes, the exact numerical value ±5%, as well as all other numerical values that are near to or approximately equal to that numerical value. Unless otherwise indicated a particular numerical value is included in "about" a specifically recited numerical value where the particular numerical value provides the substantial equivalent of the specifically recited numerical value in the context in which the specifically recited numerical value is presented. For example, a statement that something has the numerical value of "about 10" is to be interpreted as: the set of statements:
- in some embodiments the numerical value is 10;
- in some embodiments the numerical value is in the range of 9.5 to 10.5;
and if from the context the person of ordinary skill in the art would understand that values within a certain range are substantially equivalent to 10 because the values with the range would be understood to provide substantially the same result as the value 10 then "about 10" also includes:
- in some embodiments the numerical value is in the range of C to D where C and D are respectively lower and upper endpoints of the range that encompasses all of those values that provide a substantial equivalent to the value 10.

Specific examples of systems, methods and apparatus have been described herein for purposes of illustration. These are only examples. The technology provided herein can be applied to systems other than the example systems described above. Many alterations, modifications, additions, omissions, and permutations are possible within the practice of this invention. This invention includes variations on described embodiments that would be apparent to the skilled addressee, including variations obtained by: replacing features, elements and/or acts with equivalent features, elements and/or acts; mixing and matching of features, elements and/or acts from different embodiments; combining features, elements and/or acts from embodiments as described herein with features, elements and/or acts of other technology; and/or omitting combining features, elements and/or acts from described embodiments.

As will be apparent to those of skill in the art upon reading this disclosure, each of the individual embodiments described and illustrated herein has discrete components and features which may be readily separated from or combined with the features of any other described embodiment(s) without departing from the scope of the present invention.

Any aspects described above in reference to apparatus may also apply to methods and vice versa.

Any recited method can be carried out in the order of events recited or in any other order which is logically possible. For example, while processes or blocks are presented in a given order, alternative examples may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed in parallel, simultaneously or at different times.

Various features are described herein as being present in "some embodiments". Such features are not mandatory and may not be present in all embodiments. Embodiments of the invention may include zero, any one or any combination of two or more of such features. All possible combinations of such features are contemplated by this disclosure even where such features are shown in different drawings and/or described in different sections or paragraphs. This is limited only to the extent that certain ones of such features are incompatible with other ones of such features in the sense that it would be impossible for a person of ordinary skill in the art to construct a practical embodiment that combines such incompatible features. Consequently, the description that "some embodiments" possess feature A and "some embodiments" possess feature B should be interpreted as an express indication that the inventors also contemplate embodiments which combine features A and B (unless the description states otherwise or features A and B are fundamentally incompatible). This is the case even if features A and B are illustrated in different drawings and/or mentioned in different paragraphs, sections or sentences.

It is therefore intended that the following appended claims and claims hereafter introduced are interpreted to include all such modifications, permutations, additions, omissions, and sub-combinations as may reasonably be inferred. The scope of the claims should not be limited by the preferred embodiments set forth in the examples, but should be given the broadest interpretation consistent with the description as a whole.

## Claims

1. A method comprising:
receiving a plurality of first photon states from a first client device and a plurality of second photon states from a second client device, wherein each one of the first photon states encodes a corresponding first information element and each one of the second photon states encodes a corresponding second information element;
attempting to load each one of the first photon states into a quantum state of a corresponding first quantum system of a plurality of first quantum systems and attempting to load each one of the second photon states into a quantum state of a corresponding second quantum system of a plurality of second quantum systems;
communicating information indicating successfully loaded first photon states and successfully loaded second photon states to the first client device and second client device, respectively;
performing a joint parity measurement between the quantum state of one of the first quantum systems into which one of the first photon states was successfully loaded and the quantum state of one of the second quantum systems into which one of the second photon states was successfully loaded, wherein performing the parity measurement comprises consuming quantum entanglement of an entangled pair of quantum systems; and
communicating results of the parity measurement to at least one of the first client device and the second client device.

2. The method according to claim 1 wherein performing the parity measurement comprises directly or indirectly performing a first Bell state measurement (BSM) between the one of the first quantum systems into which one of the first photon states was successfully loaded and a first quantum system of the entangled pair of quantum systems and performing a second BSM between the one of the second quantum systems into which one of the second photon states was successfully loaded and a second quantum system of the entangled pair of quantum systems.

3. The method according to any of claims 1 to 2 wherein attempting to load each one of the first photon states comprises configuring a first optical path to provide an optical connection between the first client device and first input port of a Bell state analyzer (BSA) and optically connecting the corresponding one of the plurality of first quantum systems to a second input port of the BSA.

4. The method according to any of the preceding claims further comprising, emitting first pulses of light into a communication channel extending to the first client device, wherein the first photon states are photon states obtained by modulating the first pulses of light at the first client device.

5. The method according to claim 4 wherein modulating the first pulses of light comprises attenuating the first pulses of light to a single photon level and amplitude modulating a plurality of time-bin qubit states by setting amplitudes for two time bins according to the corresponding first information elements.

6. The method according to any of the preceding claims wherein the plurality of first quantum systems comprises electron spins of T centres in silicon and the method comprises swapping loaded photon states from the electron spins into quantum states of nuclear spins of the T centres.

7. An apparatus for facilitating secure communication between a plurality of client devices, the apparatus comprising:
a hub comprising: at least one optical port, a plurality of Bell state analyzers (BSAs), a plurality of first quantum systems and a plurality of second quantum systems optically interconnected by an optical switching network, the optical switching network controlled by a controller, each of the first and second quantum systems operable to store a qubit state;
wherein the controller is configured to:
configure the optical switching network to:
receive, from a first client device, a plurality of first photon states that each encode a corresponding first information element at the at least one optical port and attempt to load each of the plurality of first photon states into the quantum state of a corresponding one of the plurality of first quantum systems of the hub; and
receive, from a second client device, a plurality of second photon states that each encode a corresponding second information element at the at least one optical port and attempt to load each of the plurality of second photon states into the quantum state of a corresponding one of the plurality of second quantum systems of the hub;
perform a parity measurement between the quantum state of one of the first quantum systems into which one of the first photon states was successfully loaded and the quantum state of one of the second quantum systems into which one of the second photon states was successfully loaded;
communicate, to the first client device, information indicating which ones of the first photon states were successfully loaded and communicate, to the second client device, information indicating which ones of the second photon states were successfully loaded; and
communicate results of the parity measurement to at least one of the first and second client devices, wherein the controller is configured to create entangled pairs of quantum systems of the hub and performing the parity measurement comprises consuming quantum entanglement of a first pair of the entangled pairs of quantum systems of the hub.

8. The apparatus according to claim 7 wherein the controller is configured to coordinate performing the parity measurement by directly or indirectly performing a first Bell state measurement (BSM) between the one of the first quantum systems into which one of the first photon states was successfully loaded and a first quantum system of the first pair of the entangled pairs of quantum systems of the hub and directly or indirectly performing a second BSM between the one of the second quantum systems into which one of the second photon states was successfully loaded and a second quantum system of the first pair of the entangled pairs of quantum systems of the hub.

9. The apparatus according to claim 7 or 8 wherein the controller is configured to create the entangled pairs of quantum systems after at least one of: the one of the first photon states and the one of the second photon states was successfully loaded.

10. The apparatus according to claim 9 wherein the controller is configured to create the entangled pairs of quantum systems after both of: the one of the first photon states and the one of the second photon states was successfully loaded.

11. The apparatus according to any of claims 7 to 10 wherein the controller is configured to perform the parity measurement between the quantum state of one of the quantum systems into which one of the first photon states was successfully loaded and the quantum state of one of the quantum systems into which one of the second photon states was successfully loaded for each of plural distinct pairs, each of the plural distinct pairs comprising one of the quantum systems into which one of the first photon states was successfully loaded and one of the quantum systems into which one of the second photon states was successfully loaded.

12. The apparatus according to any of claims 7 to 11 wherein the hub comprises a light source operable to emit pulses of light into a communication channel extending to the first client device, wherein the first photon states are photon states obtained by modulating the pulses of light at the first client device.

13. The apparatus according to claim 12 comprising a wavelength modulator operable to adjust a wavelength of each of the pulses to match a wavelength of photon states emitted by the corresponding one of the first quantum systems of the hub.

14. The apparatus according to any of claims 7 to 13 wherein the hub and the first and second client devices each comprises a clock and the controller of the hub is configured to coordinate synchronizing the clock of each of the first and second client devices with respect to the clock of the hub to within about 10 ps.

15. The apparatus according to claim 7 wherein performing a parity measurement between the quantum state of one of the quantum systems into which one of the first photon states was successfully loaded and the quantum state of one of the quantum systems into which one of the second photon states was successfully loaded comprises:
performing a Bell State Measurement (BSM) between the one of the quantum systems into which one of the first photon states was successfully loaded and a first quantum system of the first pair of entangled quantum systems; and
performing a Bell State Measurement (BSM) between the one of the quantum systems into which one of the second photon states was successfully loaded and a second quantum system of the first pair of entangled quantum systems.

## Patentansprüche

1. Verfahren, das Folgendes umfasst:
Empfangen einer Vielzahl von ersten Photonenzuständen von einer ersten Client-Vorrichtung und einer Vielzahl von zweiten Photonenzuständen von einer zweiten Client-Vorrichtung, wobei jeder der ersten Photonenzustände ein entsprechendes erstes Informationselement codiert und jeder der zweiten Photonenzustände ein entsprechendes zweites Informationselement codiert;
Versuchen, jeden der ersten Photonenzustände in einen Quantenzustand eines entsprechenden ersten Quantensystems einer Vielzahl von ersten Quantensystemen zu laden und Versuchen, jeden der zweiten Photonenzustände in einen Quantenzustand eines entsprechenden zweiten Quantensystems einer Vielzahl von zweiten Quantensystemen zu laden;
Übermitteln von Informationen, die erfolgreich geladene erste Photonenzustände und erfolgreich geladene zweite Photonenzustände angeben, an die erste Client-Vorrichtung bzw. die zweite Client-Vorrichtung;
Durchführen einer gemeinsamen Paritätsmessung zwischen dem Quantenzustand eines der ersten Quantensysteme, in das einer der ersten Photonenzustände erfolgreich geladen wurde, und dem Quantenzustand eines der zweiten Quantensysteme, in das einer der zweiten Photonenzustände erfolgreich geladen wurde, wobei das Durchführen der Paritätsmessung das Verbrauchen einer Quantenverschränkung eines verschränkten Paars von Quantensystemen umfasst; und
Übermitteln von Ergebnissen der Paritätsmessung an die erste Client-Vorrichtung und/oder die zweite Client-Vorrichtung.

2. Verfahren nach Anspruch 1, wobei das Durchführen der Paritätsmessung das direkte oder indirekte Durchführen einer ersten Bell-State-Messung (BSM) zwischen demjenigen der ersten Quantensysteme, in das einer der ersten Photonenzustände erfolgreich geladen wurde, und einem ersten Quantensystem des verschränkten Paares von Quantensystemen sowie das Durchführen einer zweiten BSM zwischen demjenigen der zweiten Quantensysteme, in das einer der zweiten Photonenzustände erfolgreich geladen wurde, und einem zweiten Quantensystem des verschränkten Paares von Quantensystemen umfasst.

3. Verfahren nach einem der Ansprüche 1 bis 2, wobei das Versuchen, jeden der ersten Photonenzustände zu laden, das Konfigurieren eines ersten optischen Pfads umfasst, um eine optische Verbindung zwischen der ersten Client-Vorrichtung und dem ersten Eingangsport eines Bell-State-Analysators (BSA) bereitzustellen und das entsprechende der Vielzahl von ersten Quantensystemen optisch mit einem zweiten Eingangsport des BSA zu verbinden.

4. Verfahren nach einem der vorhergehenden Ansprüche, ferner umfassend das Emittieren erster Lichtimpulse in einen Kommunikationskanal, der sich zu der ersten Client-Vorrichtung erstreckt, wobei die ersten Photonenzustände Photonenzustände sind, die durch Modulieren der ersten Lichtimpulse an der ersten Client-Vorrichtung erhalten werden.

5. Verfahren nach Anspruch 4, wobei das Modulieren der ersten Lichtimpulse das Abschwächen der ersten Lichtimpulse auf einen einzelnen Photonenpegel und das Amplitudenmodulieren einer Vielzahl von Time-Bin-Qubit-Zuständen durch Einstellen von Amplituden für zwei Time-Bins gemäß den entsprechenden ersten Informationselementen umfasst.

6. Verfahren nach einem der vorhergehenden Ansprüche, wobei die mehreren ersten Quantensysteme Elektronenspins von T-Zentren in Silizium umfassen und das Verfahren das Austauschen von geladenen Photonenzuständen aus den Elektronenspins in Quantenzustände von Kernspins der T-Zentren umfasst.

7. Vorrichtung zum Ermöglichen einer sicheren Kommunikation zwischen einer Vielzahl von Client-Vorrichtungen, wobei die Vorrichtung Folgendes umfasst:
einen Hub, der Folgendes umfasst: mindestens einen optischen Port, eine Vielzahl von Bell-State-Analysatoren (BSAs), eine Vielzahl von ersten Quantensystemen und eine Vielzahl von zweiten Quantensystemen, die durch ein optisches Schaltnetzwerk optisch miteinander verbunden sind, wobei das optische Schaltnetzwerk durch eine Steuerung gesteuert wird, wobei jedes des ersten und zweiten Quantensystems betreibbar ist, um einen Qubit-Zustand zu speichern;
wobei die Steuerung zu Folgendem ausgebildet ist:
Konfigurieren des optischen Koppelnetzwerks für Folgendes:
Empfangen, von einer ersten Client-Vorrichtung, einer Vielzahl von ersten Photonenzuständen, die jeweils ein entsprechendes erstes Informationselement an dem mindestens einen optischen Port codieren, und Versuchen, jeden der Vielzahl von ersten Photonenzuständen in den Quantenzustand eines entsprechenden der Vielzahl von ersten Quantensystemen des Hubs zu laden; und
Empfangen, von einer zweiten Client-Vorrichtung, einer Vielzahl von zweiten Photonenzuständen, die jeweils ein entsprechendes zweites Informationselement an dem mindestens einen optischen Port codieren, und Versuchen, jeden der Vielzahl von zweiten Photonenzuständen in den Quantenzustand eines entsprechenden der Vielzahl von zweiten Quantensystemen des Hubs zu laden;
Durchführen einer Paritätsmessung zwischen dem Quantenzustand eines der ersten Quantensysteme, in das einer der ersten Photonenzustände erfolgreich geladen wurde, und dem Quantenzustand eines der zweiten Quantensysteme, in das einer der zweiten Photonenzustände erfolgreich geladen wurde;
Übermitteln, an die erste Client-Vorrichtung, von Informationen, die angeben, welche der ersten Photonenzustände erfolgreich geladen wurden, und Übermitteln, an die zweite Client-Vorrichtung, von Informationen, die angeben, welche der zweiten Photonenzustände erfolgreich geladen wurden; und
Übermitteln von Ergebnissen der Paritätsmessung an die erste und/oder die zweite Client-Vorrichtung, wobei die Steuerung dazu ausgelegt ist, verschränkte Paare von Quantensystemen des Hubs zu erzeugen, und das Durchführen der Paritätsmessung das Verbrauchen einer Quantenverschränkung eines ersten Paars der verschränkten Paare von Quantensystemen des Hubs umfasst.

8. Vorrichtung nach Anspruch 7, wobei die Steuerung dazu ausgelegt ist, das Durchführen der Paritätsmessung durch direktes oder indirektes Durchführen einer ersten Bell-State-Messung (BSM) zwischen dem einen der ersten Quantensysteme, in das einer der ersten Photonenzustände erfolgreich geladen wurde, und einem ersten Quantensystem des ersten Paars der verschränkten Paare von Quantensystemen des Hubs und direktes oder indirektes Durchführen einer zweiten BSM zwischen dem einen der zweiten zu koordinieren Quantensysteme, in die einer der zweiten Photonenzustände erfolgreich geladen wurde, und ein zweites Quantensystem des ersten Paares der verschränkten Quantensystempaare des Hubs.

9. Vorrichtung nach Anspruch 7 oder 8, wobei die Steuerung dazu ausgelegt ist, die verschränkten Paare von Quantensystemen zu erzeugen, nachdem mindestens einer der folgenden Zustände erfolgreich geladen wurde: der eine der ersten Photonenzustände und der eine der zweiten Photonenzustände.

10. Vorrichtung nach Anspruch 9, wobei die Steuerung dazu ausgelegt ist, die verschränkten Paare von Quantensystemen zu erzeugen, nachdem sowohl der eine der ersten Photonenzustände als auch der eine der zweiten Photonenzustände erfolgreich geladen wurde.

11. Vorrichtung nach einem der Ansprüche 7 bis 10, wobei die Steuerung dazu ausgelegt ist, die Paritätsmessung zwischen dem Quantenzustand eines der Quantensysteme, in den einer der ersten Photonenzustände erfolgreich geladen wurde, und dem Quantenzustand eines der Quantensysteme, in den einer der zweiten Photonenzustände erfolgreich geladen wurde, für jedes der Vielzahl von verschiedenen Paaren durchzuführen, wobei jedes der Vielzahl von verschiedenen Paaren eines der Quantensysteme, in das einer der ersten Photonenzustände erfolgreich geladen wurde, und eines der Quantensysteme, in das einer der zweiten Photonenzustände erfolgreich geladen wurde, umfasst.

12. Vorrichtung nach einem der Ansprüche 7 bis 11, wobei der Hub eine Lichtquelle umfasst, die betreibbar ist, um Lichtimpulse in einen Kommunikationskanal zu emittieren, der sich zu der ersten Client-Vorrichtung erstreckt, wobei die ersten Photonenzustände Photonenzustände sind, die durch Modulieren der Lichtimpulse an der ersten Client-Vorrichtung erhalten werden.

13. Vorrichtung nach Anspruch 12, die einen Wellenlängenmodulator umfasst, der betreibbar ist, um eine Wellenlänge jedes der Impulse anzupassen, um mit einer Wellenlänge von Photonenzuständen übereinzustimmen, die durch das entsprechende der ersten Quantensysteme des Hubs emittiert werden.

14. Vorrichtung nach einem der Ansprüche 7 bis 13, wobei der Hub und die erste und die zweite Client-Vorrichtung jeweils einen Takt umfassen und die Steuerung des Hubs dazu ausgebildet ist, das Synchronisieren des Takts jeder der ersten und der zweiten Client-Vorrichtung in Bezug auf den Takt des Hubs auf innerhalb von etwa 10 ps zu koordinieren.

15. Vorrichtung nach Anspruch 7, wobei das Durchführen einer Paritätsmessung zwischen dem Quantenzustand eines der Quantensysteme, in das einer der ersten Photonenzustände erfolgreich geladen wurde, und dem Quantenzustand eines der Quantensysteme, in das einer der zweiten Photonenzustände erfolgreich geladen wurde, Folgendes umfasst:
Durchführen einer Bell-State-Messung (BSM) zwischen dem einen der Quantensysteme, in das einer der ersten Photonenzustände erfolgreich geladen wurde, und einem ersten Quantensystem des ersten Paars von verschränkten Quantensystemen; und
Durchführen einer Bell-State-Messung (BSM) zwischen dem einen der Quantensysteme, in das einer der zweiten Photonenzustände erfolgreich geladen wurde, und einem zweiten Quantensystem des ersten Paars von verschränkten Quantensystemen.

## Revendications

1. Procédé comprenant les étapes suivantes :
recevoir une pluralité de premiers états photoniques en provenance d'un premier dispositif client et une pluralité de deuxièmes états photoniques en provenance d'un deuxième dispositif client, chacun des premiers états photoniques codant un premier élément d'informations correspondant et chacun des deuxièmes états photoniques codant un deuxième élément d'informations correspondant ;
tenter de charger chacun des premiers états photoniques dans un état quantique d'un premier système quantique correspondant d'une pluralité de premiers systèmes quantiques et essayer de charger chacun des deuxièmes états photoniques dans un état quantique d'un deuxième système quantique correspondant d'une pluralité de deuxièmes systèmes quantiques ;
communiquer des informations indiquant des premiers états photoniques chargés avec succès et des deuxièmes états photoniques chargés avec succès au premier dispositif client et au deuxième dispositif client, respectivement ;
réaliser une mesure de parité conjointe entre l'état quantique d'un des premiers systèmes quantiques dans lequel l'un des premiers états photoniques a été chargé avec succès et l'état quantique d'un des deuxièmes systèmes quantiques dans lequel l'un des deuxièmes états photoniques a été chargé avec succès, la réalisation de la mesure de parité comprenant la consommation d'une intrication quantique d'une paire de systèmes quantiques intriqués ; et
communiquer des résultats de la mesure de parité à au moins l'un du premier dispositif client et deuxième dispositif client.

2. Procédé selon la revendication 1, dans lequel l'exécution de la mesure de parité comprend l'exécution directe ou indirecte d'une première mesure d'état de Bell (BSM) entre l'un des premiers systèmes quantiques dans lequel l'un des premiers états photoniques a été chargé avec succès et un premier système quantique de la paire intriquée de systèmes quantiques et l'exécution d'un deuxième BSM entre l'un des deuxièmes systèmes quantiques dans lequel l'un des deuxièmes états photoniques a été chargé avec succès et un deuxième système quantique de la paire intriquée de systèmes quantiques.

3. Procédé selon l'une quelconque des revendications 1 et 2, dans lequel la tentative de chargement de chacun des premiers états photoniques comprend la configuration d'un premier chemin optique pour fournir une connexion optique entre le premier dispositif client et le premier port d'entrée d'un analyseur d'état de Bell (BSA) et la connexion optique du système correspondant de la pluralité de premiers systèmes quantiques à un deuxième port d'entrée du BSA.

4. Procédé selon l'une quelconque des revendications précédentes, comprenant en outre d'émettre des premières impulsions de lumière dans un canal de communication s'étendant jusqu'au premier dispositif client, où les premiers états photoniques sont des états photoniques obtenus en modulant les premières impulsions de lumière au niveau du premier dispositif client.

5. Procédé selon la revendication 4, dans lequel la modulation des premières impulsions de lumière comprend d'atténuer les premières impulsions de lumière à un niveau photonique unique et de moduler en amplitude une pluralité d'états de qubit à codage temporel en réglant les amplitudes de deux bins temporels conformément aux premiers éléments d'information correspondants.

6. Procédé selon l'une quelconque des revendications précédentes, dans lequel la pluralité de premiers systèmes quantiques comprend des spins d'électrons de centres T dans le silicium et le procédé comprend de permuter les états photoniques chargés des spins d'électrons en états quantiques de spins nucléaires des centres T.

7. Dispositif pour faciliter une communication sécurisée entre une pluralité de dispositifs clients, l'appareil comprenant :
un concentrateur comprenant : au moins un port optique, une pluralité d'analyseurs d'état de Bell (BSA), une pluralité de premiers systèmes quantiques et une pluralité de deuxièmes systèmes quantiques interconnectés optiquement par un réseau de commutation optique, le réseau de commutation optique étant commandé par un contrôleur, chacun des premier et deuxième systèmes quantiques pouvant fonctionner pour stocker un état de qubit ;
où le contrôleur est configuré pour :
configurer le réseau de commutation optique pour :
recevoir, en provenance d'un premier dispositif client, une pluralité de premiers états photoniques qui codent chacun un premier élément d'informations correspondant au niveau de l'au moins un port optique et tentent de charger chacun de la pluralité de premiers états photoniques dans l'état quantique d'un système correspondant de la pluralité de premiers systèmes quantiques du concentrateur ; et
recevoir, en provenance d'un deuxième dispositif client, une pluralité de deuxièmes états photoniques qui codent chacun un deuxième élément d'informations correspondant au niveau de l'au moins un port optique et tentent de charger chacun de la pluralité de deuxièmes états photoniques dans l'état quantique d'un système correspondant de la pluralité de deuxièmes systèmes quantiques du concentrateur ;
réaliser une mesure de parité entre l'état quantique d'un des premiers systèmes quantiques dans lequel l'un des premiers états photoniques a été chargé avec succès et l'état quantique d'un des deuxièmes systèmes quantiques dans lequel l'un des deuxièmes états photoniques a été chargé avec succès,
communiquer, au premier dispositif client, des informations indiquant quels états des premiers états photoniques ont été chargés avec succès et communiquer, au deuxième dispositif client, des informations indiquant quels états des deuxièmes états photoniques ont été chargés avec succès ; et
communiquer les résultats de la mesure de parité à au moins l'un des premier et deuxième dispositifs clients, le contrôleur étant configuré pour créer des paires intriquées de systèmes quantiques du concentrateur, et réaliser la mesure de parité comprend de consommer l'intrication quantique d'une première paire parmi les paires intriquées de systèmes quantiques du concentrateur.

8. Appareil selon la revendication 7, dans lequel le contrôleur est configuré pour coordonner l'exécution de la mesure de parité en effectuant directement ou indirectement une première mesure d'état de Bell (BSM) entre l'un des premiers systèmes quantiques dans lequel l'un des premiers états photoniques a été chargé avec succès et un premier système quantique de la première paire de paires intriquées de systèmes quantiques du concentrateur et exécuter directement ou indirectement une deuxième BSM entre l'un des deuxièmes systèmes quantiques dans lesquels un des deuxièmes états photoniques a été chargé avec succès et un deuxième système quantique de la première paire de paires intriquées de systèmes quantiques du concentrateur.

9. Appareil selon la revendication 7 ou la revendication 8, dans lequel le contrôleur est configuré pour créer les paires intriquées de systèmes quantiques après au moins l'un des événements parmi : l'état des premiers états photoniques et l'état des deuxièmes états photoniques a été chargé avec succès.

10. Appareil selon la revendication 9, dans lequel le contrôleur est configuré pour créer les paires intriquées de systèmes quantiques après les deux événements suivants : l'état des premiers états photoniques et l'état des deuxièmes états photoniques ont été chargés avec succès.

11. Appareil selon l'une quelconque des revendications 7 à 10, dans lequel le contrôleur est configuré pour effectuer la mesure de parité entre l'état quantique de l'un des systèmes quantiques dans lequel l'un des premiers états photoniques a été chargé avec succès et l'état quantique de l'un des systèmes quantiques dans lequel l'un des deuxièmes états photoniques a été chargé avec succès pour chacune de plusieurs paires distinctes, chacune de la pluralité de paires distinctes comprenant un des systèmes quantiques dans lesquels un des premiers états photoniques a été chargé avec succès et un des systèmes quantiques dans lequel un des deuxièmes états photoniques a été chargé avec succès.

12. Appareil selon l'une quelconque des revendications 7 à 11, dans lequel le concentrateur comprend une source de lumière actionnable pour émettre des impulsions de lumière dans un canal de communication s'étendant vers le premier dispositif client, où les premiers états photoniques sont des états photoniques obtenus en modulant les impulsions de lumière au niveau du premier dispositif client.

13. Appareil selon la revendication 12, comprenant un modulateur de longueur d'onde pouvant être mis en œuvre pour ajuster une longueur d'onde de chacune des impulsions pour correspondre à une longueur d'onde d'états photoniques émis par l'un correspondant des premiers systèmes quantiques du concentrateur.

14. Appareil selon l'une quelconque des revendications 7 à 13, dans lequel le concentrateur et les premier et deuxième dispositifs clients comprennent chacun une horloge et le contrôleur du concentrateur est configuré pour coordonner la synchronisation de l'horloge de chacun des premier et deuxième dispositifs clients par rapport à l'horloge du concentrateur dans la limite d'environ 10 ps.

15. Appareil selon la revendication 7, dans lequel l'exécution d'une mesure de parité entre l'état quantique de l'un des systèmes quantiques dans lequel l'un des premiers états photoniques a été chargé avec succès et l'état quantique de l'un des systèmes quantiques dans lequel l'un des deuxièmes états photoniques a été chargé avec succès comprend les étapes suivantes :
réaliser une mesure de l'état de Bell (BSM) entre le système parmi les systèmes quantiques dans lequel l'un des premiers états photoniques a été chargé avec succès et un premier système quantique de la première paire de systèmes quantiques intriqués ; et
réaliser une mesure de l'état de Bell (BSM) entre le système parmi les systèmes quantiques dans lequel l'un des deuxièmes états photoniques a été chargé avec succès et un deuxième système quantique de la première paire de systèmes quantiques intriqués.
